# EUROPEAN PATENT SPECIFICATION

(11) **EP 2 110 958 B1**
(45) Date of publication and mention of the grant of the patent: **04.12.2013**
(21) Application number: 08165515.1
(22) Date of filing: 26.07.2004
(51) Int. Cl.: H04B 3/54, G01D 4/00, H04Q 9/00

(54) **Data communication over power lines**
Datenübertragung über Stromleitungen
Communication de données via des lignes électriques

(30) Priority: 24.07.2003 US 626495; 24.07.2003 US 626496; 24.07.2003 US 626465
(43) Date of publication of application: 21.10.2009
(62) Divisional of application: 04779245.2
(73) Proprietor: Landis+Gyr Technologies, LLC, Pequot Lakes, Minnesota 56472 (US)
(72) Inventor: Bonicatto, Damian, G., Pequot Lakes, MN 56472 (US); Olson, Verne, J., Pequot Lakes, MN 56472 (US); Wolter, Chad, K., Breezy Point, MN 56472 (US); Flen, Rolf, J., Pequot Lakes, MN 56472 (US); Olson, David, F., Pequot Lakes, MN 56472 (US)
(74) Representative: HOFFMANN EITLE

(56) References cited:
- WO-A1-95/01030
- WO-A1-98/55975
- WO-A2-99/16160

## Description

### Technical Field

This invention relates generally to data communication, and more particularly to data communication over power lines.

### Background

As is true with most companies, utility companies are striving to reduce overhead costs, while providing more convenience to customers. For example, electric companies are migrating from costly and time-consuming manual methods of determining the amount of power consumed by customers of the power company. Traditionally, a person periodically came to the customer's home, and requested entry to read the consumer power usage from a power meter. This type of process was costly, slow, and intrusive to their customers.

Newer systems provide some level of remote communication between an endpoint such as an electrical meter and a central location. One such system is an automated meter reading (AMR) system that utilizes a power line to establish a data link between a concentrator and endpoint meter reading units positioned downstream from the substation. The concentrator typically includes a transmitter for transmitting control information to the endpoint and a receiver for receiving data such as watt-hour information from the endpoint. The endpoint includes a transmitter, a receiver, and electronics or other circuitry for reading the meter. Other remote meter reading and data communication systems that use modems, radio frequency signals, or PLC signals can communicate with only one endpoint at a time and thus have limited capacity.

These current systems have shortcomings. For example, the capacity of such systems is limited because the concentrator (or other central processing system if modems or RF are used) can receive signals from only one endpoint at a given time. This limitation provides a bottleneck that limits the processing power and flexibility of the system. Additionally, it limits the number of endpoints that the concentrator can communicate within a 24-hour period and hence limits the number of endpoints that can be connected downstream from any given concentrator.

The systems also have little scalability. This limitation is caused by two factors including the limited number of endpoints that can be connected downstream from a concentrator and by the manual programming required every time that an endpoint is added to the system.

Other shortcomings of current AMR and other power line data communication systems relate to reliability, flexibility, and scalability. For example, the system needs to be manually programmed each time an endpoint is added. In another example, if there is a power outage, automated meter reading systems generally require polling of the endpoints to determine which ones are still operational. This polling is slow and consumes processing and communication resources. Furthermore, current systems generally do not have the capability of reestablishing communication between an endpoint and an alternative concentrator if the communication link between the concentrator and the endpoint is disconnected by intentionally taking the substation off line, through a power failure.

Background art of interest is disclosed in WO/99/16160, specifically a system and method for providing full-duplex data communications between an electric power distribution station and a power consumer via a power distribution line providing electric power. A first information transmitter, coupled to the power distribution circuit, provides first information signals concurrently with the power signal to the power consumer via the power distribution line. A first information receiver, coupled to a power consumer device powered by the electrical power signal, receives the first information signals via the electric power distribution line. A second information transmitter coupled to the power consumer device provides second information signals concurrently with the electrical power signal. A second information receiver, coupled to the power distribution circuit, receives the second information signals via the electric power distribution line. The information signals transmitted on the power distribution line can be transmitted at a frequency lower than the frequency of the transmitted power signal.

### Summary

In general terms, the present invention relates to a system for bi-directional communication over a power distribution system having power distribution lines.

The present invention provides a system for bi-direction communication within a power distribution system according to appended Claim 1, a computer data signal according to Claim 7, and a method of communicating within a power distribution system according to claim 8. Optional features are set out in the dependent claims.

### Description of the Drawings

Figure 1 is a block diagram illustrating one link of a power distribution network over which data is communicated between a distribution substation and an endpoint according to one possible embodiment of the present invention
Figure 2 is a block diagram illustrating a portion of a power distribution network over which data is communicated between a distribution substation and an endpoint according to one possible embodiment of the present invention.
Figure 3 is a schematic illustrating a substation controller and power line coupler according to one possible embodiment of the present invention.
Figure 4 is a block diagram illustrating a hierarchy of data channels as they are demodulated according to one possible embodiment of the present invention.
Figure 5 is a block diagram illustrating a circuit for processing data received at a substation transceiver in one possible embodiment of the present invention.
Figures 6A-6D is a block diagram illustrating a digital signal processing circuit for demultiplexing and demodulating a plurality of data channels according to one possible embodiment of the present invention.
Figure 7 is a block diagram illustrating components of a substation transceiver for transmitting a signal onto a power distribution network according to one possible embodiment of the invention.
Figure 8 is a block diagram illustrating a digital signal processing circuit for demodulating a transmission signal fed back into a substation transceiver according to one possible embodiment of the present invention.
Figure 9 is a flowchart illustrating operation of at least a portion of the commands programmed into a computer illustrated in Figure 5.

### Detailed Description

Various embodiments of the present invention will be described in detail with reference to the drawings, wherein like reference numerals represent like parts and assemblies throughout the several views. Reference to various embodiments does not limit the scope of the invention, which is limited only by the scope of the claims attached hereto. Additionally, any examples set forth in this specification are not intended to be limiting and merely set forth some of the many possible embodiments for the claimed invention.

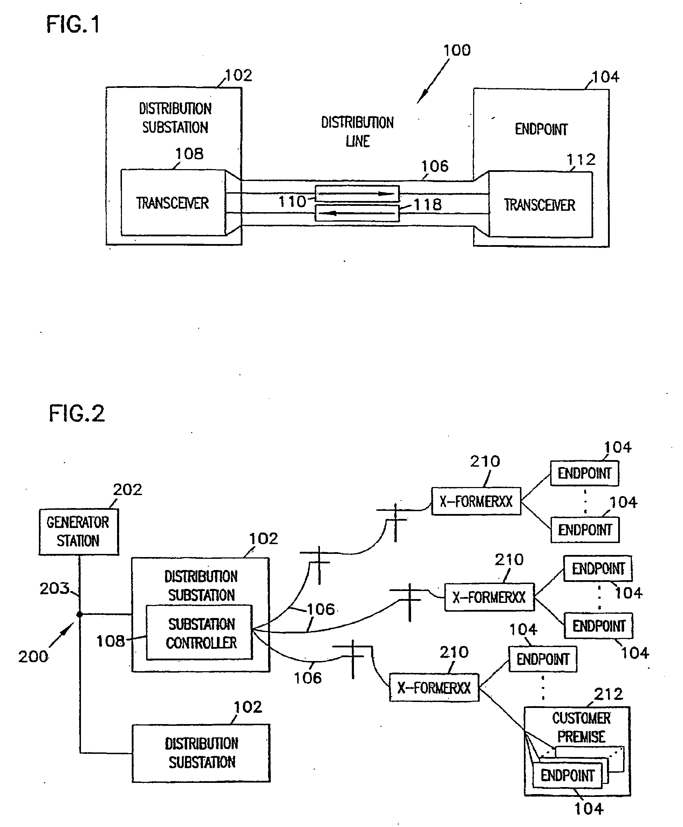

Figure 1 is a block diagram of one link of an electric distribution system **100** distributing power between a distribution substation and a customer device at the power consumer's site. An electrical distribution system, or distribution plant as it is sometimes referred to, is that part of an electric power system that receives power from a power generator via high-voltage transmission lines, reduces or steps down the voltage, and then distributes the power to an endpoint at the premise of an energy customer. Within the electrical distribution system, distribution lines typically conduct electricity from the distribution substation to the endpoints. Distribution lines typically consist of underground cable, aerial cable, or overhead open-wire conductors carried on poles, or some combination of them.

There may be multiple layers of distribution substations connected in series between the power generation and the endpoint, wherein each consecutive distribution substation further steps down the voltage of the electricity being transmitted. Additionally, the power generators, distribution substations, and endpoints are commonly organized in a network where various generators supplying power can be taken on or off line and the distribution substation through which a particular endpoint receives its electricity can be changed, all without a loss or interruption of power.

Distribution transformers are ordinarily connected in the distribution line between the distribution substation and the endpoint, which the distribution transformers serve to further step-down the voltage to a level that is used by consumers. These step-down transformers, often referred to as pole transformers, supply a consumer or group of consumers over a secondary circuit. Each consumer is connected to the secondary circuit through its service leads and meter.

The distribution substation **102** shown in Figure 1 provides power to a customer device or endpoint **104** via a distribution line **106**. The distribution line **106** may be coupled to one or more step-down transformers before reaching the customer premise. The distribution line **106** provides the power necessary to operate electrical devices, located at the endpoint **104**, which is a device at the customer premise.

For a variety of reasons, it may be desirable to communicate information from the distribution substation **102** to one or more endpoints **104** at a particular customer premise. For example, it may be desirable to control or monitor a meter-reading device, which is installed at a customer premise to determine the power consumption at that customer premise. Additionally, control information could provide the ability to control or alter the operation of the meter-reading device and/or individual loads at the customer premise. Utility companies often provide a customer with a power rate discount if the customer agrees to allow for a temporary adjustment of their consumption. For example, a power company may provide a customer with a rate discount where the customer agrees to allow the power company to temporarily adjust or terminate their power consumption for certain nonessential power consuming devices, such as water heaters, swimming pool heaters, air conditioners, etc. during peak operation. This allows the utility company to limit the peak power consumption when necessary, hereinafter referred to as "load control."

Other more general information, which is not necessarily to "control" customer devices, also can be provided via the power distribution lines. These general information signals are transmitted in the same manner as signals intended to control a customer device. Such general information signals include information to display or store the price of power at the customer premise, the date and time, the temperature or other information capable of being received and translated at the customer premise. For example, the time displayed on an electronic device at the customer premise could be periodically adjusted to display an accurate time as transmitted by the utility station.

Various embodiments of the apparatuses and methods disclosed herein communicate control signals and general information signals to endpoints **104** via the Distribution line **106** to control customer devices and provide more general information to the customer. Information from the customer device also may be sent via the distribution line **106** to the distribution substation **102**, thereby creating a two-way control information communication link via the distribution line **106**. The aforementioned examples of control signal applications where control signals (and/or general information signals) are provided by the distribution substation to an endpoint 104 are merely representative of the various uses that such control signals provide. Therefore, the examples provided throughout the application are illustrative in nature, as the invention is not limited to any particular control signal use.

In order to provide control information at the distribution substation **102**, a substation controller **108**, which includes a substation transceiver, is used to drive the control signals along the distribution line **106** in the direction represented by the arrow **110**. An endpoint transceiver **112** at the customer device **104** is configured to recognize the control signals transmitted by the substation controller **108**. Similarly, the substation controller **108** receives information, such as a power consumption reading, from the endpoint transceiver **112** in the direction represented by arrow **118**.

The control information communications link **100** shown in Figure 1 therefore provides a full-duplex or bi-directional communication link between the distribution substation **102** and the endpoint **104**, which is typically located at a customer premise. Full duplex in this sense refers to simultaneous communications in both directions, although the information sent in one direction may travel at a speed different from that of the information provided in the opposite direction. This full-duplex communication link via the distribution line **106** provides for reliable transmission of control information, without the need for additional wiring, thereby minimizing cost and increasing data integrity.

Referring now to Figure 2, a block diagram of a power distribution system **200**, which is substantially similar to the electrical distribution system **100** described above. In this exemplary embodiment, generating station **202** provides the bulk power to downstream distribution substations **102** via high-power transmission lines **203**. At least one of the distribution substations **102** includes the substation controller **108**. As can be seen by the example of Figure 2, the substation controller **108** can simultaneously communicate data via the distribution lines **106** to multiple endpoints **104** residing in multiple customer premises. The control information can pass through transformers 210, and ultimately to a particular endpoint 104 located at a customer premise. A plurality of endpoints 104 located at different customer premises may be serviced by a particular transformer 210. Furthermore, a single customer premise such as site 212 may include a plurality of different customer devices or endpoints 104. The transfer of control information from a substation controller 108 to a great number of endpoint transceivers at different endpoints 104 is very useful and cost effective. In various embodiments, one or more of the distribution substations 102 may include the substation controller 108 for communicating with endpoints 104 located downstream from the distribution substation 102. In other embodiments, the substation controller 108 is located at points that are upstream from multiple endpoints 104 other than a distribution substation 102.

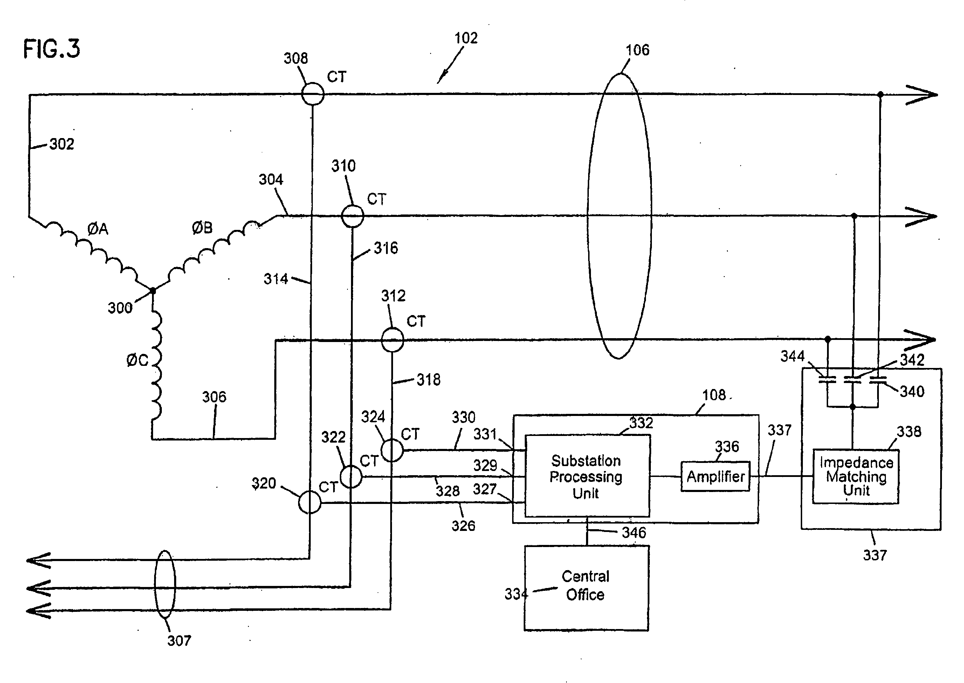

Figure 3 illustrates the distribution substation 102 and one possible example of the connection of the substation controller 108 to the distribution line 106. In this exemplary embodiment, the distribution line 106 interfaces with a main transformer 300 that provides three-phase power (φA, φB, and φC) and includes three distribution line conductors 302, 304, and 306, one for conducting each phase of the power. The first conductor 302 conducts φA, the second conductor 304 conducts φ8, and the third conductor 306 conducts φC.

A metering loop 307 has three metering lines 314, 316, and 318 that interface with the three distribution line conductors 302, 304, and 306, respectively. The metering line 314 interfaces with the distribution line conductor 302 through a current transformer 308, the metering line 316 interfaces with the distribution line conductor **304** through a current transformer **310**, the metering line **318** interfaces with the distribution line conductor **306** through a current transformer **312**.

The substation controller **108** has three inputs **327**, **329**, and **331** for receiving data from the endpoint transceivers **112** and one output **337** for sending data to the endpoint transceivers, and includes a substation processing unit **332** and an amplifier **336**. The three inputs **327**, **329**, and **331** interface with the metering loop **307** through current transformers **320**, **322**, and **324**, respectively. Specifically, a first input has a line **326** that is coupled to the metering line **314** through a current transformer **320**, a second input has a line **328** that is coupled to the metering line **316** through a current transformer **322**, and a third input has a line **330** that is coupled to the metering line **318** through a current transformer **324**.

In this exemplary embodiment, signals transmitted by an endpoint transceiver **112** connected to the first distribution line conductor **302**, are communicated over the distribution line conductor **302**, the metering line **314**, the input line **330**, and into the first input **327** of the substation controller **108**. Signals transmitted from endpoint transceivers **112** connected to the second and third distribution line conductors **304** and **306** are fed to the substation controller **108** through inputs **329** and **331**; respectively, following similar paths along distribution line conductors **304** and **306**, respectively, metering lines **316** and **318**, respectively, and input lines **328** and **330**, respectively.

The substation processing unit **332** has a single output that feeds signals for downstream communication to the endpoint transceivers **112**. This downstream signal from this single output is input to the amplifier **336**. The amplifier **336** then outputs the downstream signal from the substation controller **108** to a power line coupler **337**, which is formed by an impedance matching unit **338** and capacitors **340**, **342**, and **344**.

The identical signal is then communicated from the impedance matching **338** onto each of the distribution line conductors **302**, **304**, and **306** through the capacitors **340**, **342**, and **344**, respectively. The impedance matching unit **338** matches the impedance between the distribution line conductors **302**, **304**, and **306** and the amplifier **336**. The capacitors **340**, **342**, and **344** electrically isolate the impedance matching unit from the distribution line **106**.

In this exemplary embodiment, the substation controller **108** transmits its command to all of the downstream endpoint transceivers **112**. In an alternative embodiment, the substation controller **108** can address a downstream signal to a particular endpoint transceiver **112**.

In yet another possible embodiment, the substation controller **108** can shift the phase of the signal transmitted onto each of the distribution line conductors **302**, **304**, or **306** so that each conductor conducts a signal having a different phase. If the signal bleeds from one distribution line conductor **302**, **304**, or **306** to another distribution line conductor **302**, **304**, or **306**, the signals tend to cancel each other because the electricity conducted on each of the distribution line conductors **302**, **304**, or **306** is out of phase by about 120°. Shifting the phase of the signal transmitted by the substation controller **108** reduces this cancellation when a signal bleeds from one distribution line conductor **302**, **304**, or **306** to another distribution line conductor **302**, **304**, or **306**.

As explained in more detail herein, the substation processing unit communicates with a central office **334** via a data network **346**. In various embodiments, the data network **346** is established using a suitable means for data communication. Examples, include the Internet, an Intranet, a wide area network, a local area network, satellite, microwave, and a modem interfacing with a plain old telephone line (POTS)

Additionally, other structures may have alternative structures and methods for retrieving a data signal from the distribution line **106**, for transmitting a data signal onto the distribution line **106**, and processing the signals in the substation controller **108**. For example, the substation controller **108** might be broken into a separate receiver and transmitter.

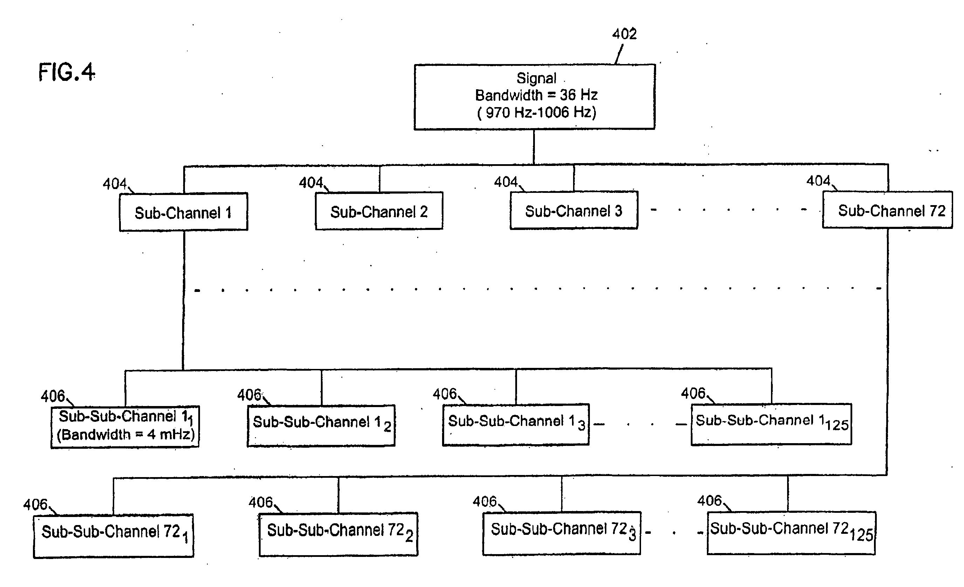

Referring to Figure 4 and as explained in more detail herein, the endpoint transceivers **112** disclosed in the exemplary embodiment modulate the signals that they transmit to the substation controller **108** using frequency shift keying and transmits its signal to the substation controller **108** located at the distribution substation **102**. In one possible embodiment of this modulation scheme, each endpoint transceiver **112** sends its signal within a channel **402** having a predetermined bandwidth of about 36 Hz, from about 970 Hz to about 1,006 Hz. When demodulating the signals received over the 36 Hz channel **402**, the substation controller **108** separates the signals into about 72 sub-channels **404**. It then separates each of the sub-channels **404** into about 125 sub-sub-channels **406**. Each of the sub-sub channels **406** is assigned to a different downstream endpoint transceiver **112** and corresponds to a signal having a bandwidth of about 4 Hz.

In the exemplary embodiment, each endpoint transceiver **112** is assigned predetermined bandwidth of about 4 Hz, and each assigned predetermined bandwidth within the main channel **402** is mutually exclusive from one another. Given this configuration, the substation controller **108** has the capacity to receive signals from about 9,000 separate downstream endpoint transceivers **112**. Additionally, the predetermined bandwidth for each sub-sub-channel **406** includes a base frequency to which an endpoint transceiver **112** is assigned and any frequency to which the base frequency is shifted when the endpoint transceiver **112** modulates a signal for transmission to the substation controller **108**.

The distribution substation controller **108** demodulates each signal received from separate endpoint transceivers **112** substantially simultaneously, which provides significant advantages. For example, it increases the capacity of the system because the substation controller **108** does not have to delay reception of one signal from an endpoint transceiver **112** until the reception of the previous signal is completed.

As further explained herein, each distribution line **106** has three phases and one distribution line conductor **302**, **304**, and **306** for each phase. The interface for each of the three distribution line conductors **302**, **304**, and **306** receives one channel over each of the three distribution line conductors **302**, **304**, and **306**. In one possible embodiment, each channel has a bandwidth of about 36 Hz, from about 970 Hz to about 1,006 Hz. Accordingly, the substation controller **108** performs the demodulation scheme illustrated in Figure 4 for each distribution line conductor **302**, **304**, and **306** of the distribution line **106**. This configuration gives the substation transceiver **106** the capacity to receive signals from up to about 9,000 endpoint transceivers **112** on any one or combination of the three distribution line conductors **302**, **304**, and **306**.

There are many other additional embodiments in addition to those described herein. For example, an endpoint transceiver **112** can communicate with the substation controller **108** using any modulation scheme, including modulation schemes other than frequency shift keying, that permit simultaneous or substantially simultaneous demodulation of signals received from the endpoint transceivers **112**. Additionally, other bandwidths can be used within the apparatus and methods disclosed herein. For example, the channel **402** might include a frequency bandwidth other than 36 Hz and other than the range of 970 Hz to 1,006 Hz. Yet other embodiment will have the capacity to receive signals from fewer than 9,000 endpoint transceivers **112** or more than 9,000 endpoint transceivers **112**.

In alternative embodiments, the endpoint transceivers **112** communicate using frequency bandwidths other than 4 mHz. For example, various embodiments might use a frequency bandwidth of about 10 mHz or less, including frequencies of about 2 mHz, 6 mHz, or 8 mHz. Yet other embodiments use frequency bandwidths other than 2 mHz, 4 mHz, 6 mHz, 8 mHz, or 10 mHz. Still other embodiments might use frequency bandwidths greater than 10 mHz.

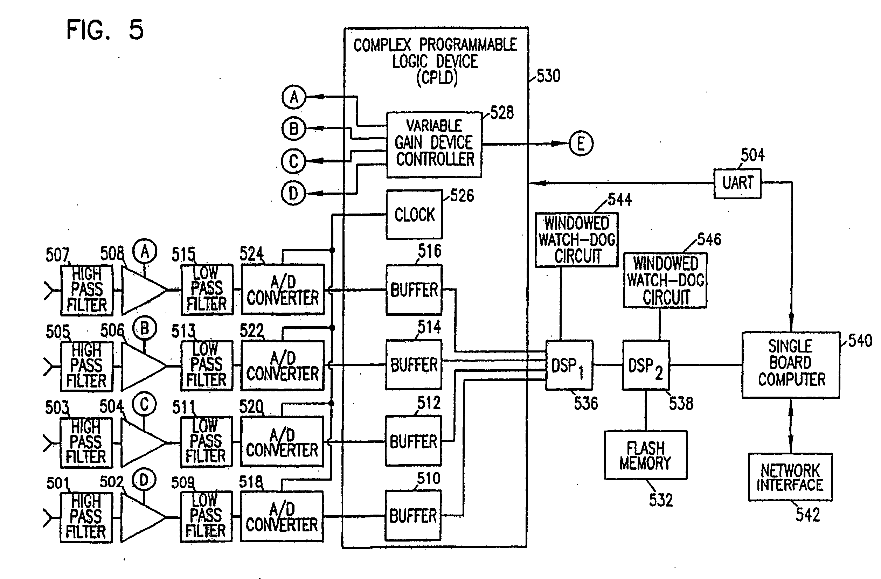

Referring to Figure 5, the exemplary embodiment of the substation processing unit **332** includes four low pass filters **501**, **503**, **505**, and **507**, four variable gain devices **508**, **510**, **512**, **514**, and **516**, four high pass filters **509**, **511**, **513**, and **515**, a complex programmable logic device (CPLD) **530**, four analog to digital (A/D) converters **518**, **520**, **522**, and **524**, first and second digital signal processors (DSP) **536** and **538**, two windowed watch-dog circuits **544** and **546**, a single board computer **540**, flash memory **532**, and a modem **542**.

The CPLD 530 is programmed to include a clock **526**, a variable gain controller **528**, and four receive buffers **510**, **512**, **514**, and **516** that are used to buffer the signals received from the distribution line that are being input to the first and second DSPs **536** and **538** for demodulation. As explained in more detail herein, the CPLD **530** may have additional buffers for various functions such as buffering data being transmitted by the substation controller **108**. One type of CPLD that can be used is chip no. XC95144XL, which is manufactured by XILINX located in California, U.S.A.

The clock **526** provides a clocking signal to each of the A/D converters **518**, **520**, **522**, and **524**. The variable gain controller **528** provides a signal to each of the variable gain devices **502**, **504**, **506**, and **508**. In one possible embodiment, the variable gain devices **502**, **504**, **506**, and **508** are op amps that output a signal having an amplitude of about 2.5 Volts.

The flash memory **532** stores the code for the first and second DSPs **536** and **538**. The flash memory **532** also stores an error log that records error signals generated by the first and second DSPs **536** and **538**.

As explained in more detail herein, the first and second DSPs **514** and **516** demodulate the signals received over the distribution line **106** using frequency shift keying. The second DSP **538** then outputs the demodulated data into the signal board computer **540**, which stores the data in the memory (not shown). One type of chip that can be used for the DSPs is chip no. TMS3206711, which is manufactured by Texas Instruments located in Texas, U.S.A.

In operation, an endpoint transceiver **112** generates a signal that embodies data and transmits that signal over the distribution line **106**. For exemplary purposes, the endpoint transceiver **112** is in electrical communication with and transmits its signal over the distribution line conductor **302**. The signal then propagates through the current transformer **308**, along metering loop line **314**, through current transformer **320**, along input line **326**, and into the first input **327**.

The signal is conditioned by passing through the high pass filter **501**, the first variable gain device **502**, and the low pass filter **509**. The variable gain device **502** is an amplifier that biases the signal a predetermined amount such as about 2.5 Volts. The high pass and low pass filters **501** and **509** isolate the signal and remove noise. The signal is converted from analog to digital by the first A/D converter **518** and input to the first buffer **510** programmed into the CPLD **530**. The buffered signal is input to the first DSP **536**. The first DSP **536** performs a first portion of the operations to demodulate the signal and then passes the signal to the second DSP **538**, which completes the demodulation process. The demodulated signal is input to the single board computer **540**.

Signals transmitted on the transmission conductor **304** similarly propagate through the current transformer **310**, along metering line **316**, through current transformer **322**, along input line **328** and input second input **329**. The signals then propagate through the high pass filter **503**, through the variable gain device **504**, through the low pass filter **511**, through the second A/D converter **520** and input the second buffer **512** programmed into the CPLD **530**. The signal then is processed by the first and second DSPs **536** and **538**, and input to the single board computer **540**.

Signals transmitted on the distribution line conductor **306** also similarly propagate through the current transformer **312**, along metering line **318**, through current transformer **324**, along input line **330** and input second input **331**. The signals then propagate through the high pass filter **505**, through a variable gain device **506**, through the low pass filter **513**, through an A/D converter **522** and input the second buffer **514** programmed into the CPLD **530**. The signal then is processed by the first and second DSPs **536** and **538**, and input to the single board computer **540**.

The first and second DSPs **536** and **538** monitor each of the distribution line conductors **302**, **304**, and **306** for each sub-sub-channel **406**. Thus, if an endpoint transceiver **112** is transmitting a signal on one of the sub-sub-conductors **302**, **304**, or **306** and the signal bleeds to the other two conductors, the substation controller **108** will receive three separate signals within the frequency band of the sub-sub-channel **406**. The single board computer **540** then determines which of the signals has the greatest amplitude and discards data from the other two signals. An advantage of this embodiment is that a technician installing the endpoint transceiver **112** can quickly connect it to any of the distribution line conductors **302**, **304**, or **306**.

Signals transmitted by the substation controller **108** are fed back into the substation controller **108** and recorded. This feedback provides a historical record of the data actually transmitted onto the distribution line **106**. Because the transmitted signal propagates wherever power is distributed, it is also transmitted to a 120 volt outlet in which a power supply (not shown) for the single board computer **540** is plugged. A signal is picked up from the power supply, and is then processed similar to the signals that are transmitted on the distribution line **106** by the endpoint transceivers **112**. More specifically, the signal is fed through the high pass filter **507**, through the variable gain device **508**, through the low pass filter **515**, and then through the fourth A/D converter **524**. The signal is then buffered **516** by the fourth buffer programmed in the CPLD **530** and input to the first and second DSPs **536** and **538** where it is demodulated.

The first DSP **536** sends a watch-dog signal to the windowed watch-dog timer **544** at a predetermined interval. If the windowed watch-dog timer **544** does not receive a watch-dog signal within the predefined window, it generates and sends a reset signal to the first DSP **536**. In one possible embodiment, the window within which the windowed watch-dog circuit **544** looks to receive a watch-dog signal is from about 0.7 seconds to about 1.3 seconds. The second DSP **538** interfaces with the windowed watch-dog timer **545** in a similar manner.

The single board computer **540** is a standard computer board **540** that includes a programmable processor, memory, and various inputs and outputs. One type of single board computer that can be used in Model # EBCTXPLUS-5222B, which is manufactured by WinSystems located in Texas, U.S.A. The single board computer **540** communicates with the second DSP **538** through a data bus **534**. In the exemplary embodiment, the data bus **534** is a universal asynchronous receive and transmit (UART) data bus that communicates according to the RS-485 data protocol. The second DSP **538** includes a command processor or decoder that decodes commands received from the single board computer **540** and then either processes the command itself or relays the command to the first DSP **536**, clock **526**, variable gain device controller **528**, or other hardware or firmware element for execution.

Additionally, the single board computer **540** communicates to the outside world through a network interface **542**. Examples of possible network interfaces include modems for communication over plain old telephone lines (POTS). Other examples, include hardware and drivers to support communication using the Internet, an Intranet, a wide area network (WAN), a local area network (LAN), satellite, microwave, or any other type of network connection that can be used for communicating data to remote locations, whether the communication is over hardwired lines or is wireless.

Although a certain hardware and software configuration is illustrated in this exemplary embodiment for receiving and processing data signals there are many possible alternative embodiments and the invention can be embodied in any configuration of hardware and/or software that can receive, demodulate, and demultiplex the signals.

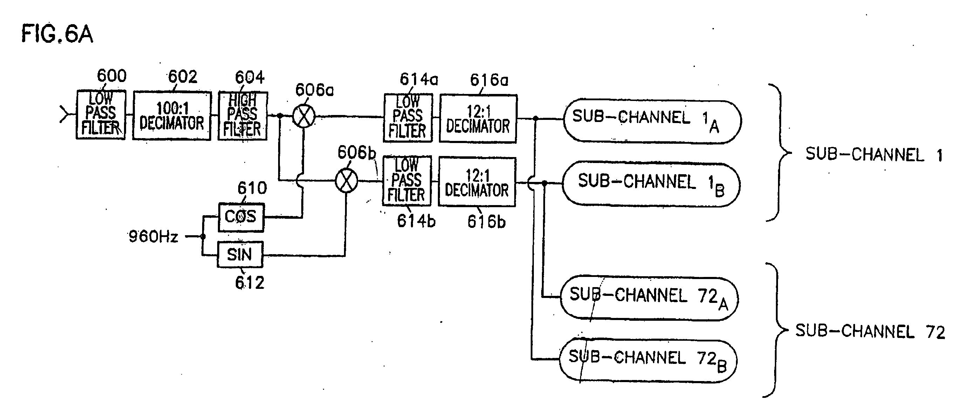

Referring to Figures 4 and 6A, the signal output from the first D/A converter **518** and buffered in the first buffer **510** corresponds to the main channel **402**, which in the exemplary embodiment has a bandwidth of about 36 Hz (970 Hz to 1006 Hz). The signal is input to the first DSP **536**, where it passes through a low pass filter **600**, through a 100:1 decimator **602** and then a high pass filter **604**.

In one possible embodiment, the low pass filter **600** has a cutoff frequency of about 1090 Hz and prevents aliasing or the erroneous interpretation of a high frequency component as a lower frequency component as the signal is sampled. The 100:1 decimator **602** changes the sampling rate from about 250,000 samples per second (sps) to about 2,500 sps. The 100:1 decimator **602** reduces the sampling rate by accumulating 200 words. The high pass filter **604** has a cutoff frequency of about 906 Hz and filters all frequencies below 906 Hz, including the 60 Hz component from the alternating current conducted by the transmission line **100**.

The signal is then passed to first and second signal branches **606a** and **606b**. Along the first signal branch **606a**, the signal passes through a mixer **608a** that combines the signal with a cosine wave **610** having a predetermined frequency. In exemplary embodiment disclosed herein the cosine wave has a frequency of about 960 Hz, which is line locked to the power distribution frequency of the 120/240V input for the SPU **332**. An advantage of line locking the frequency of the cosine wave is that it will vary with the frequency (about 60 Hz) of the alternating current carried by the distribution line **106**, which is the carrier wave for the signals transmitted by the endpoint transceivers **112**. The signal then passes through a low pass filter **614a** and then a 12:1 decimator **616a**. In one possible embodiment, the low pass filter **614a** has a cutoff frequency of about 50 Hz and the 12:1 decimator **618a** changes the sampling rate from about 2500 sps to about 208.33 sps.

The signal passed to the second branch **606b** is processed in a similar manner passing through a mixer **608b**, a low pass filter **614b**, and a 12:1 decimator **618b**. In the exemplary embodiment, the only difference for the processing in the first branch **606a** is that the mixer combines the signal with a sine wave having a frequency of about 960 Hz.

In the exemplary embodiment, the code for the 12:1 decimators **618a** and **618b** are split between the first and second DSPs **536** and **538**. Accordingly, the signals propagating along the first and second signal branches **606a** and **606b** are passed from the first DSP **536** to the second DSP **538** as they are being processed by the 12:1 decimators **616a** and **616b**. In another possible embodiment, all of the demodulation steps illustrated in Figure 6A-6C are performed in a single digital signal processor so long as it has enough processing power and memory.

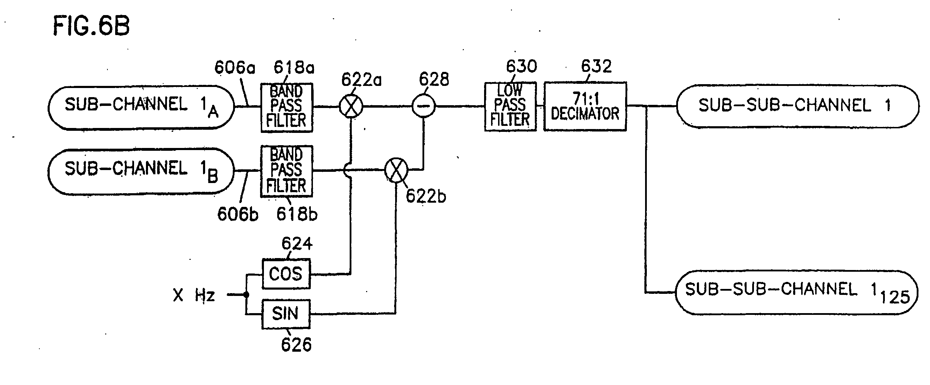

Referring to Figures 4 and 6B, the signal output by the 12:1 decimators **616a** and **616b** are input into 72 parallel sub-channel signal branches, each parallel sub-channel signal branch corresponding a separate sub-channel **404**. As it passes through each of the parallel sub-channel signal branches, the signal transmitted along the first signal branch **606a** passes through a bandpass filter **618a**, through a mixer **622a**, and into a subtractor **628**. In the exemplary embodiment, the bandpass filter has a lower cutoff frequency of about 10 Hz and an upper cutoff frequency of about 10.5. The mixer **622a** mixes the signal with a cosine wave **624** having a predetermined frequency of about 9.8 Hz, which is line locked to the power distribution frequency of the 120/240V input for the SPU **332**.

Similarly, the signal transmitted along the second signal branch 606b passes through a bandpass filter **618b**, through a mixer **622b**, and into the subtractor **628**. The primary difference from the first signal branch **606a** is that the mixer **622b** combines the signal with a sine wave having a frequency of about 9.8 Hz, which is line locked to the power distribution frequency of the 120/240V input for the SPU **332**. The subtractor **628** then subtracts the signal processed along the second signal branch **606b** from the signal processed along the first signal branch **606a**. The signal output from the subtractor **628** is passed through a low pass filter **630** and a 71:1 decimator **632**. The low pass filter **630** has a cutoff frequency of about 0.7 Hz and further isolates the data signal. The 71:1 decimator further reduces the sampling rate from about 208.33 sps to about 2.93 sps.

In the exemplary embodiment, the bandpass filter **618b** has a lower cutoff frequency of about 10 Hz and an upper cutoff frequency of about 10.5. The mixer **622b** mixes the signal with a sine wave **626** having a predetermined frequency of about 9.8 Hz, which is line locked to the power distribution frequency of the 120/240V input for the SPU **332**.

Each of the parallel sub-channel signal braches is substantially the same as the illustrated block diagram for sub-channel 1. The primary difference is that the frequency input to the mixer is incremented by about 0.5 Hz for each successive sub-channel **404**. The frequency input to the mixer is line locked to the power distribution frequency of the 120/240V input for the SPU **332**. Similarly, the maximum and minimum cutoff frequencies for the bandpass filters **618** are increased by about 0.5 Hz for each successive sub-channel **404**. Thus, for example, the second sub-channel has a mixer frequency of about 10.3 Hz and the bandpass filter has cutoff frequencies of about 10.5 Hz and about 11.0 Hz. In this exemplary embodiment, the seventy-second sub-channel has a mixer frequency of about 45.3 Hz and the bandpass filter has cutoff frequencies of about 45.5 Hz and about 50.0 Hz.

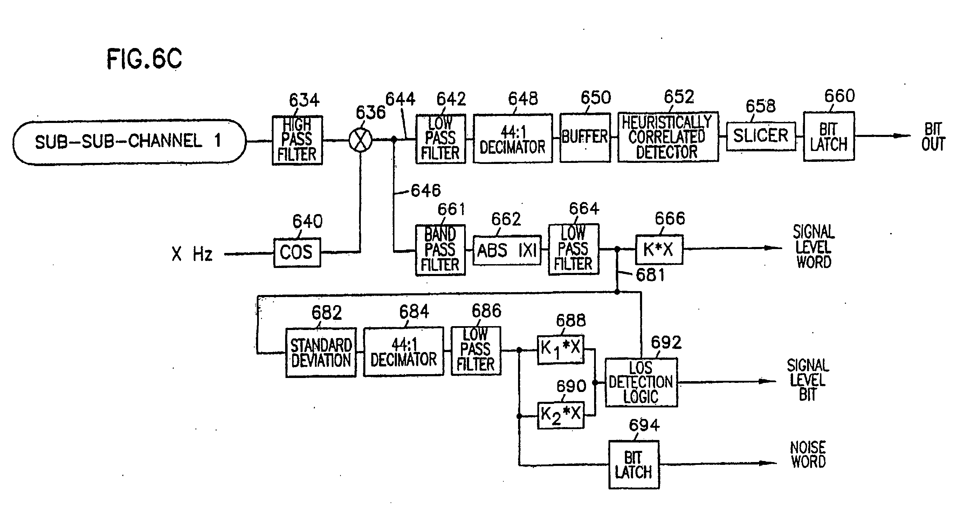

Referring to Figures 4 and 6C, the signal output by the 71:1 decimator **632** for each parallel sub-channel signal branch is input into **125** parallel sub-sub-channel signal branches. Each parallel sub-sub-channel signal branch corresponds to a separate sub-sub-channel **406**. Given the architecture in this exemplary embodiment, there are about 9000 parallel sub-sub channel signal branches.

The signal input to the first sub-sub-channel signal branch passes through a high pass filter **634**, a mixer **636**, and a low pass filter **642**. In the exemplary embodiment, the high pass filter **634** has a cut off frequency of about 0.198 Hz, and the mixer **652** combines the data signal with a cosine wave **640** having a frequency of about 0.184 Hz, which is line locked to the power distribution frequency of the 120/240V input for the SPU **332**.

After passing through the low pass filter **642**, the data signal is output to a first signal branch **644** and a second signal branch **646**. The signal passed to the first signal branch **644** is passed through a 44:1 decimator **648**, which decreases the sampling rate from about 2.93 sps to about 0.0667 sps.

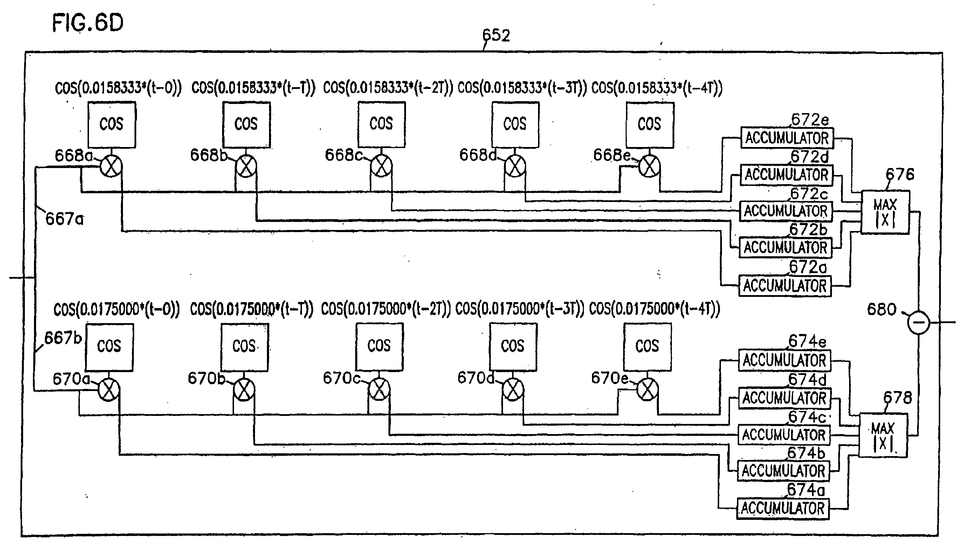

Referring to Figures 6C and 6D, the decimated signal passed into a heuristically correlated detector **652**, which estimates the phase of the signal received from the endpoint transceiver 112. The signal propagates onto two signal paths **667a** and **667b**. On the first signal branch, the signal is input to five multipliers **668a-668e**. The first multiplier **668a** mixes the signal with a cosine wave having a phase calculated according cos(0.01583333(t-0)). The second multiplier **228b** mixes the signal with cosine wave having a phase calculated according to cos(0.0158333(t-T)) where t is time and T is the sample rate of the signal output by the 44:1 decimator **648**. The third multiplier **668c** mixes the signal with cosine wave having a phase calculated according to cos(0.0158333(t-2T)) where t is time and T is the sample rate. The fourth multiplier **668d** mixes the signal with cosine wave having a phase calculated according to cos(0.0158333(t-3T)) where t is time and T is the sample rate. The fifth multiplier **668e** mixes the signal with cosine wave having a phase calculated according to cos(0.0158333(t-4T) where t is time and T is the sample rate. In the exemplary embodiment, the samples output by the multipliers **668a-668e** are accumulated by the accumulators **672a-672e**, respectively, for about a 20-minute period, which results in the collection of about 80 samples. The sample from each of the accumulators **672a-672e** is input to a maximum value function **676**. The maximum value function **676** then determines which of the five samples received from the accumulators **672a-672e** has the greatest value and inputs that greatest value to the subtractor **680**. The maximum value function **676** discards the remaining samples.

Similarly, the signal propagating along the second signal branch **667b** is input to multipliers **670a-670e**. The first multiplier **670a** mixes the signal with a cosine wave calculated according to cos(0.0175000(t-0)). The second multiplier **670b** mixes the signal with a cosine wave calculated according to cos(0.0175000(t-T)), where T is the sampling rate of the signal output by the 44:1 decimator **648**. The third multiplier **670c** mixes the signal with a cosine wave calculated according to cos(0.0175000(t-2T)), where T is the sampling rate of the signal output by the 44:1 decimator **648**. The fourth multiplier **670b** mixes the signal with a cosine wave calculated according to cos(0.0175000(t-3T)), where T is the sampling rate of the signal output by the 44:1 decimator **648**. The fifth multiplier **670b** mixes the signal with a cosine wave calculated according to cos(0.0175000(t-4T)), where T is the sampling rate of the signal output by the 44:1 decimator **648**. In the exemplary embodiment, the samples output by the multipliers **670a-670e** are accumulated by the accumulators **674a-674e**, respectively, for about a 20-minute period, which results in the collection of about 80 samples. The sample from each of the accumulators **674a-674e** is input to a maximum value function **678**. The maximum value function **678** then determines which of the five samples received from the accumulators **674a-674e** has the greatest value and inputs that greatest value to the subtractor 680. The maximum value function **678** discards the remaining samples. The subtracter then determines the difference between the samples received from the maximum value functions **676** and **678** and outputs the difference to the slicer **658**.

Alternative embodiments of the heuristically correlated detector **65** are possible. For example, it can estimate the phases of the signal received by the endpoint transceiver more accurately, by mixing the signal propagating along each of the signal branches with more than five cosine functions having the phase of the function increases in smaller increments. For example, it could increment the phase by about 0.5T rather than about 1T. The heuristically correlated detector also could estimate the phases of the signal less accurately by mixing signals with fewer cosine functions having the phase function for each cosine function increased in greater increments.

Referring back to Figure 6C, the slicer **658** limits each sample received from the heuristically correlated detector between two predetermined amplitude boundaries, which increases the signal-to-noise ratio. In one possible embodiment, the upper boundary is a voltage level of about +1 volts and the lower boundary is voltage level of about -1 volts. In the exemplary embodiment, the slicer 658 reads the sliced samples at about 20-minute intervals, although other embodiments will read the sliced samples at other intervals.

A bit latch **660** is clocked and synchronized with the slicer **658** so that it is set by the last bit at the same interval at which the slicer **658** reads the sliced sample. Again, in the exemplary embodiment, the interval is about 20 minutes although other embodiments might have other intervals. Again other embodiments might if the last bit has a positive value, the bit latch **660** sets a logical "1". If the last bit has a negative value, the bit latch **660** sets a logical "0". The bit output by the latch **660** is then input to the single board computer **540**, which stores the data in memory.

The signal passed to the second signal branch **646** passes through a bandpass filter **661**, which in the exemplary embodiment has a pass band from about 15.08333 mHz to about 18.25 mHz. The signal is then passed through an absolute value function **662** that rectifies the signal and through a low pass filter **664**, and through a scaling function **666**. In the exemplary embodiment, the low pass filter **664** that has a cut off frequency that is adjustable in the range from about 250 µHz to about 1.0 mHz. The cut off frequency is adjusted until the low pass filter **664** smoothes the signal being processed and the second DSP 538 outputs a signal strength word that accurately identifies the strength of the signal being received from the endpoint transceiver **112**.

The scaling function **666** scales the amplitude of the signal within the bandwidth defined by the low pass **filter 664**. In the exemplary embodiment, it scales the amplitude of the signal by a factor of about 9.587x 10^{-6*}(Gain/100), where Gain is the gain of the variable gain device **502**, **504**, or **506** that provides an input for the signal being processed by the scaling function **666**. The scaled signal is a binary signal strength word that corresponds to the strength or amplitude of the signal received from the endpoint transceiver **112**. The single board computer **540** can selectively obtain the signal strength word.

The signal output by the low pass filter **664** is also input to a fault detection signal branch **681** that determines whether the substation controller **108.** fails to receive a signal from the endpoint transceiver **112** on that sub-sub channel **406** or whether the signal that it is receiving is too noisy. The signal passes through a standard deviation function **682**. The signal has a D.C. bias, and the standard deviation function **682** calculates the standard deviation of the signal's amplitude, which varies around the D.C. bias.

The signal output by the standard deviation function is input to a 44:1 decimator, which reduces the sampling rate from about 2.93 sps to about 0.0667 sps. The signal then passes through a low pass filter **686** that has a cut off frequency that is adjustable between about 1 µHz to about 100 µHz. The cut off frequency is adjusted until the low pass filter **686** smoothes the signal being processed and the second DSP **538** outputs a signal strength bit and a noise word that accurately indicates lost and noisy sub-sub-channels **406**, respectively, with a desired degree of accuracy.

The signal is then input to a high-limit scaling-function **688** and a low-limit scaling function **690**. The high-limit scaling function **688** scales the amplitude of the signal by the factor 240*(Gain/100), where Gain is the gain of the variable gain device **502**, **504**, or **506** that provides an input for the signal being processed by the scaling.function **688**. The constant (240 in the exemplary embodiment) used in the scaling function **688** is set so that the output of the scaling function **688** is about 6 sigma. The output of the scaling function **688** is an upper limit. Similarly, the low-limit scaling function **690** scales the amplitude of the signal by the factor 120*(Gain/100), where Gain is the gain of the variable gain device **502**, **504,** or **506** that provides an input for the signal being processed by the scaling function **690**. The constant (120 in the exemplary embodiment) used in the scaling function **690** is set so that the output of the scaling function **690** is about 3 sigma. The output of the scaling function **690** is a lower limit.

The upper and lower limits are input to LOS detection logic **692**, which compares the unscaled signal strength word output by the low pass filter **664** to the upper and lower limits output by the scaling functions **688** and **690**. The LOS detection logic **692** outputs a signal strength bit indicating a lost channel if the strength of the signal received on the sub-sub-channel **406**, as output by the low pass filter **664**, first goes above the upper limit and then below the lower limit or if the strength of the signal never goes above the upper limit. The LOS detection logic **692** outputs a signal strength bit indicating a signal is being received on the sub-sub-channel **406** if the strength of the signal as output by the low pass filter **664** goes above the upper limit and stays above the upper limit: The LOS detection logic **692** also outputs a signal strength bit indicating a signal is being received on the sub-sub-channel **406** if the strength of the signal as output by the low pass filter **664** goes above the upper limit and then falls below the upper limit but not below the lower limit. The single board computer **540** selectively obtains the bit output by the LOS detection logic **692**.

The output of the low pass filter **686** is also input to a bit latch **694**, which latches the binary word output by the low pass filter **686**. The value of this word is the standard deviation and corresponds to the amount of noise present in the signal received on the sub-sub-channel **406**. The single board computer **540** selectively obtains the noise word latched by the bit latch **694**.

The single board computer **540** stores in memory the signal strength word received from the scaling function **666**, the signal strength bit output by the LOS detection logic **692**, and the noise word output by the bit latch **694**. If the single board computer **540** does not receive the signal strength bit from the LOS detection logic **692** and it determines that there should be an endpoint transceiver **112** sending a signal on that particular sub-sub-channel **406**, it can generate an error. In one possible embodiment, the single board computer **540** can then send a command to find the missing endpoint transceiver **112**. In another possible embodiment, the single board computer **540** can send the signal strength bit or other data item to the central office **334** either indicating a possible failure in the distribution plant or identifying the endpoint transceiver **112** as failed so that it can be repaired or replaced.

Additionally, one can use the signal strength word output by the scaling function **666** for diagnostic purposes. For example, if there is a signal strength word, but the scaled value is not within the predetermined range, one might adjust the biasing of the variable gain device **502**, **504**, or **506**. In yet another possible embodiment, the single board computer **540** automatically instructs the variable gain device controller **528** in the CPLD **530** to adjust the bias of the variable gain device **502**.

Other possible embodiments might include different combinations of bits or binary words output by the LOS detection logic **692**. In one possible embodiment, the LOS detection logic **692** outputs only a single signal strength bit. In other embodiments, the LOS detection logic **692** outputs binary words or other combinations of bits and/or flags. Yet another possible embodiment does not include the fault detection signal branch **681**. This embodiment outputs only the signal strength word from the scaling function **666** and the single board computer **540** uses this information to determine the presence or absence of a signal from the endpoint transceiver **112**. Other possible embodiments do not include the separate signal branch **646** at all.

Again, although an exemplary embodiment of digital signal processing logic is illustrated and described herein, many other embodiments for demodulating received signals are possible. For example, the demodulating and demultiplexing can be performed using any combination of hardware and/or software and any type of multiplexing/demultiplexing and modulation/demodulation schemes that can simultaneously process signals received from multiple endpoint transceivers **112**.

Each of the parallel sub-sub-channel signal braches is substantially the same as the illustrated block diagram for sub-sub-channel 1. The primary difference is that the frequency input to the mixer is incremented by about 0.004 Hz for each successive sub-sub-channel **406**. The frequency input to the mixer is line locked to the power distribution frequency of the 120/240V input for the SPU **332**. Similarly, the maximum and minimum cutoff frequencies for the high pass filters **634** are increased by about 0.004 Hz for each successive sub-sub-channel **406.** Thus, for example, the second sub-sub-channel has a mixer frequency of about 0.188 Hz and the high pass filter has a cutoff frequency of about .202 Hz. In this exemplary embodiment, the one hundred twenty-fifth sub-sub-channel has a mixer frequency of about 0.680 Hz and the high pass filter has cutoff frequency of about .694 Hz.

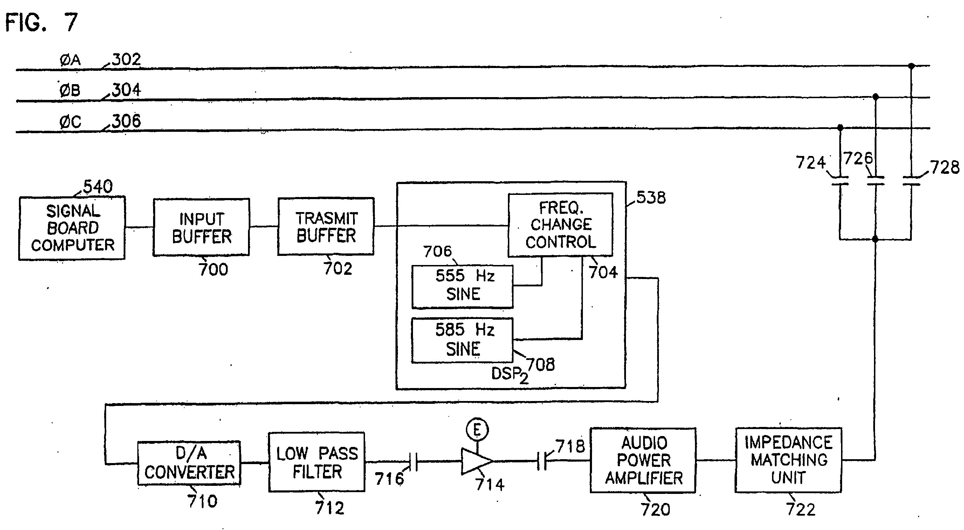

Referring to Figure 7, when transmitting a signal to the endpoint transceivers **112**, the single board computer **540** generates a data packet that contains a message. The data packet is then buffered by an input buffer **700** and a transmit buffer **702**, both of which are 60-second buffers that hold the data for one minute.

The input and the transmit buffers **700** and **702** form a ping-pong buffering scheme. The data passes first through the input buffer **700** and then through the transmit buffer **702**. When the data is received at the transmit buffer **702**, it sends a message to the input buffer **700** to delete the data from the input buffer register. This buffering scheme prevents the loss of data.

The data is held in the transmit buffer **702** for about 60 seconds and then input to the second DSP **538** where it is modulated using a single channel, binary frequency shift keying scheme. Specifically, the data passes through a frequency change function **704**. The frequency change function **704** determines whether the frequency shifts from one frequency to another. If the frequency shifts, the frequency change function **704** determines that the data bit is a logical "1". If the frequency does not shift, the frequency change function **704** determines that the data bit is a logical "0". In the exemplary embodiment, the frequency change function determines whether the data bit is a logical "1" or "0" depending on whether the frequency shifts between frequencies of about 555 Hz and about 585 Hz.

The data is output from the second DSP **538** and input to a digital to analog (D/A) converter **710,** which outputs a modulated transmit signal to a low pass filter **712.** The low pass filter **712** has a cut-off frequency of about 1.2 KHz and smoothes the modulated transmit signal. The modulated transmit signal then passes through a variable gain device **714** that is electrically isolated by capacitors **716** and **718.** The variable gain device **714** is biased by the variable gain device controller **528** of the CPLD **530.** The variable gain device **714** is biased to set the modulated transmit signal at a predetermined voltage level. In one possible embodiment, the variable gain device **714** sets the modulated transmit signal to a voltage level of about 1.4 Volts RMS.

The modulated transmit signal from the variable gain device **714** is then amplified. In one exemplary embodiment, the modulated transmit signal is amplified by a power audio amplifier **720** capable of amplifying a signal by about 400 Watts or more. One type of power audio amplifier that can be used is model K1, which is manufactured by Crown Audio, Inc., of Indiana, U.S.A. After it is amplified, the modulated transmit signal is passed through an impedance matching unit **722**, and then is simultaneously transmitted onto each of the distribution line conductors **302**, **304**, and **306** through the isolation capacitors **724**, **726**, and **728**, respectively. The modulated transmit signal simultaneously propagates along each of the transmission conductors **302**, **304**, and **306** to each of the endpoint transceivers **112.**

To prevent insertion loss and distortion of the modulated transmit signal, the impedance matching unit **722** matches the impedance between the output of the audio power amplifier **720** and the distribution line conductors **302, 304,** and **306.** One skilled in the art will appreciate that the impedance matching unit **722** includes an inductance-capacitance network (not shown).

Although a certain hardware and software configuration for transmitting and processing data signals is illustrated in this exemplary embodiment, there are many possible alternative embodiments and the invention can be embodied in any configuration on hardware and/or software that can transmit and modulate the transmission signals.

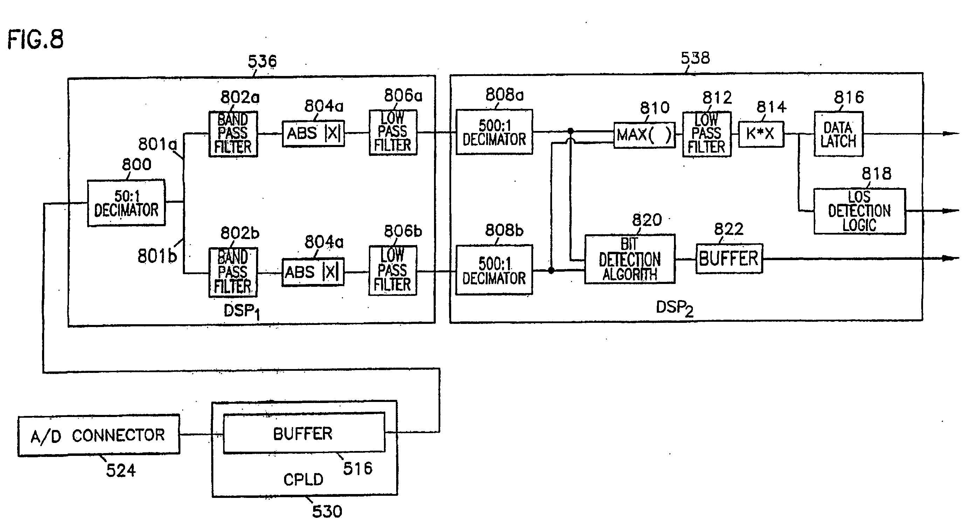

As discussed above, and referring to Figures 5 and 8, the modulated transmit signal propagates to the 120/240V input for the SPU **332.** The voltage level is taken from the power supply, conditioned, input to the fourth A/D converter **524,** buffered **516** in the fourth buffer programmed into the CPLD **530,** and then input to the first DSP **536.**

Within the first DSP **536,** the transmit signal is passed through a 50:1 decimator, which converts the sample rate of the signal from about 500,000 samples per second (sps) to about 10,000 sps. The signal then propagates onto two signal branches **801a and 801b.** Within the first signal branch **801a**, the signal first passes through a bandpass filter **802a** having a first predefined pass band. In one possible embodiment, the bandpass filter **802a** has a lower cutoff frequency of about 575 Hz and an upper cutoff frequency of about 595 Hz. It isolates signals having a frequency of about 585 Hz. In other embodiments, the bandpass filter **802a** has different bandpasses.

The signal then flows through an absolute value function **804a,** which rectifies the signal, and then through a low pass filter **806a**, which has a cutoff frequency of about 5 Hz. The low pass filter **806a** smoothes the rectified signal. The rectified signal passes through a 500:1 decimator **808a**, which changes the sample rate from about 10,000 sps to about 20 sps. The signal is then passed from the first DSP **536** to the second DSP **538.**

The signal passed along the second signal branch **801b** is processed in a substantially similar method. It flows through a bandpass filter **802b**, an absolute value function **804b**, a low pass filter **806b**, and then a 500:1 decimator **808a.** The primary difference from the first signal branch **801** a is that the bandpass filter **802b** has a second predefined pass band. In one possible embodiment, the bandpass filter **802b** has a lower cutoff frequency of about 545 Hz and an upper cutoff frequency of about 565 Hz. It isolates a signal having a frequency of about 555 Hz. In other embodiments, the bandpass filter **802b** has different bandpasses.

The signal output from each signal branch **801a** and **801b** is input to a max signal function **810**, which selects the signal that has the largest amplitude and then passes the larger of the two signals through a low pass filter **812.** The low pass filter **812** further smoothes the signal so that a steady-state signal strength can be determined. The low pass filter **812** has a cutoff frequency of about 100 mHz. The filtered signal then is passed through a scaling function **814** that biases the voltage level of the signal by a predetermined factor. In one possible embodiment, the predetermined factor, which equals 1.1x10⁻⁴*(Gain/100), where Gain is the gain of the variable gain device **508.**

The scaled signal is input to both a data latch **816** and a loss-of-signal (LOS) detection logic **818.** In one possible embodiment, the data latch **816** operates in a substantially similar manner as the data latch **668.** The LOS detection logic **818** compares signal strength to a predetermined value and outputs a signal strength bit indicating whether the signal strength is below the predetermined value. Additionally, the data latch **816** and the LOS detection logic **818** interface with the single board computer **540** in a substantially similar manner as the data latch **668** and the LOS detection logic **692.** The primary difference is that the single board computer **540** uses the output of the data latch **816** and the LOS detection logic **818** to determine whether the substation controller **108** is properly transmitting a signal onto the distribution **line 106** as opposed to determining whether a signal is being properly received from the endpoint transceiver **112.** The data latch **816** and LOS detection logic **818** can have similar alternative embodiments as the data latch **668** and the LOS detection logic **692**, respectively.

The signal output from each signal branch **801a** and **801b** also is input to a bit detection algorithm **820**, which determines whether the data bit is a logical "1" or "0". In one possible embodiment, the bit detection algorithm **820,** which is programmed into the second DSP **538**, receives the signal output from each signal branch **801a** and **801b.** The bit detection algorithm then calculates which signal has a greater amplitude or value. If the signal that has the greater amplitude changes, the bit detection algorithm **820** determines that the frequency changed and corresponds to a logical "1" and outputs a high or "1" bit. If the signal that has the greater amplitude does not change, the bit detection algorithm **820** determines that there is not change in the frequency, which corresponds to a logical "0" and outputs a low or "0" bit. The bits output by the bit detection algorithm **820 are** input to a buffer **822.** In one possible embodiment, the buffer **822** is a 60-second buffer that accumulates data in one-minute increments and then outputs the data to the flash memory **532** where it is stored.

In one possible embodiment, the flash memory **532** stores the data transmitted by the substation controller **108** for a predetermined period of time, such as 4.5 days. As new data is stored in the flash memory **532**, it overwrites oldest data. The data is retrieved from the flash memory **532** upon receiving a fetch command from the single board computer **540.** In one possible embodiment, the single board computer **540** generates a fetch command upon receiving instructions from a user.

Although and exemplary embodiment of digital signal processing logic is illustrated and described herein, many other embodiments for modulating a data signal for transmission are possible. For example, modulation can be performed using any combination of hardware and/or software and any type of modulation scheme that is compatible with the endpoint transceivers **112.**

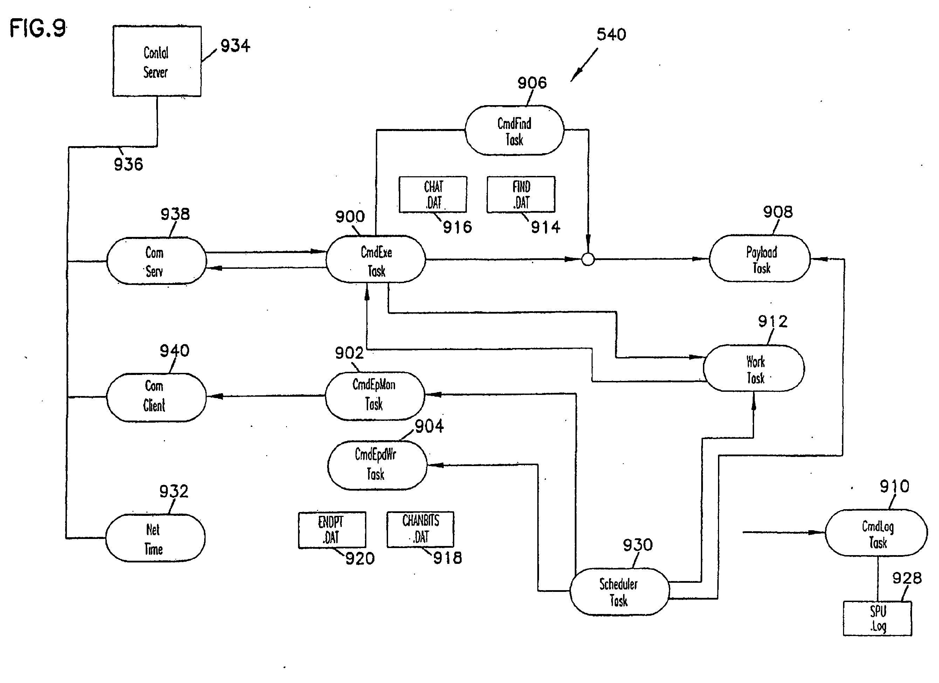

Referring to Figure 9, the single board computer **540,** which has a preemptive operating system, communicates with a control server **934** via a data communication link **936** such as an Ethernet network. In the exemplary embodiment, the controller server **934** is centrally located in the central office **334** and communicates with single board computers located at several different substations. The control server **934** generates commands and forwards them to the single board computer **540.** The single board computer **540** then assembles the commands into data packets, and the substation controller **108** relays the commands to the endpoint transceivers **112.** The control server **934** also sends commands to the single board computer **540** instructing the computer **540** to upload data to the control server **934**.

The code executed by the single board computer **540** is organized into tasks. In the exemplary embodiment, there are three tasks that control communication with the data communication link **936.** These tasks are the Com Serv task **938,** the Com Client task **940**, and the Net Time task **932**.

The control server **934** communicates with the single board computer **540** using a metalanguage such as XML. The Com Serv task **938** is a command processor that receives commands and data from the control servers **934.** The commands and data that it receives are in XML. The Com Serv task **938** then parses the commands into a predetermined data structure that is understandable by the operating code executed by the single board computer **540.** In the exemplary embodiment, the Com Serv task **938** receives and processes all of the commands that communicated from the control server **934** to the single board computer **540.**

Additionally, the Com Serv task **938** processes data for uploading to the control server **934** by converting it to XML and then transmitting it to the control server **934** over the data communication link **936.** With the exception of certain data processed and transmitted by the Com Client task **940**, all of the data transmitted to the Control server **934** is processed and transmitted by the Com Serv task **938.**

In the exemplary embodiment, the Com Client task **940** converts certain data to XML and then transmits it to the control server **934.** In the illustrated embodiment, the Com Client task **940** processes and transmits messages and data that are not specifically requested by the control server **934** or otherwise scheduled for period transmission to the control server **934.** An example includes a message that the status of a sub-sub-channel **406** was changed to Lost, indicating that substation controller **108** failed to receive a signal from the endpoint transceiver **112** assigned or mapped to that sub-sub-channel **406.** In one possible embodiment, the Com Client task **940** reports the Lost status to the control server **934** if the status of the sub-sub-channel is not restored in a predetermined amount of time. In another embodiment, the Com Client task **940** reports the Lost status to the control server **934** as soon as the Lost status of the sub-sub-channel **406 is** generated, which permits quick identification of failures, including the type and location of the error. It also permits the quick dispatch of technicians and/or engineers for repair.

The Com Client task **940** also process and transmits messages and data requested by the control server **934** in certain circumstances. In the exemplary embodiment, the Com Client server **940** processes and transmits data that takes more than a significant amount of time to generate when requested from the control server **934.** An example of such a command includes a request by the control server to rebuild the table (discussed herein with respect to the CHAT.DAT data file **916**) allocating each of the endpoint transceivers **112** to a particular sub-sub channel **406.** In this exemplary embodiment, a significant amount of time lapses between the time the single board computer **540** requests information or an action and the time the single board computer **540** responds to the request or acknowledges the action.

The code in the single board computer **540** defines on a command-by-command basis, whether the Com Serv task **938** or the Com Client task **940** processes and transmits data to the control server **934.** In this embodiment, a table stores a list of commands executable by the single board computer **540** and identifies either the Com Serv task **938** or the Com Client task **940** as the task responsible for sending the requested information or acknowledgement of the requested action to the control server **934.**

The Net Time task **932** retrieves the current time from a global time server that provides an accurate time source. The global time server retrieves the current time based on Universal Time Coordinated (UTC) from a source such as the Global Positioning System (GPS) or a DCF77 signal, which is a radio clock signal generated by an atomic clock. In the exemplary embodiment, the global time server is located remotely **102** and is connected to the single board computer **540** via the data communication link **936.** Additionally, the single board computer **540** is programmed to adjust the UTC for the time zone served by the distribution substation **102** and for daylight savings time, if time is adjusted for daylight savings time in the geographic region served by the distribution substation **102.** In an alternative embodiment, the global time server is programmed to adjust the UTC for the time zone served by the distribution substation **102** and for daylight savings time, if time is adjusted for daylight savings time in the geographic region served by the distribution substation **102.**

In the exemplary embodiment, the global time server retrieves the UTC in a predetermined interval such as once per day. In turn, the Net Time task **932** retrieves the time, which is adjusted as appropriate, in a predetermined interval such as once per day. The Net Time task **932** has a clock function that tracks the time and is recalibrated to the time retrieved from the global time server. In other embodiments, the global time server retrieves and adjusts the time more or less frequently than once per day and the Net Time task **932** retrieves the time from the global time server more or less frequently than once per day. For example, the global time server can retrieve the UTC in intervals such as 5 minutes. Similarly, the Net Time task **932** can retrieve the time from the global time server in intervals such as 5 minutes.

The single board computer **540** is also programmed with a plurality of tasks for executing a variety of functions and stored data files. In the exemplary embodiment, these tasks include a CmdExe task **900**, a Payload task **908**, a Work task **912**, a Scheduler task **930**, CmdEpMon task **902**, a CmdEpdWr task **904**, a CmdLog task **910**, and a CmdFind task **906.** Data files include a CHAT.DAT file **914**, a FIND.DAT file **916**, an ENDPT.DAT file **920**, a CHANBITS.DAT file **918**, and a SPU.LOG file **928.**

The CmdExe task **900** executes all of the tasks received and processed by the Com Serv task **938.** The CmdExe task **900** executes commands requesting data to be uploaded to the control server **934.** The CmdExe task **900** also either executes (or initiates execution of commands by other tasks) requesting a change in the operating parameters of the single board computer **540.** Examples include reporting lost endpoint transceiver **112** to the control server **934,** initiating commands to find a new or a lost endpoint transceiver **112**, commands to reassign an endpoint transceiver **112** from one sub-sub-channel **406** to another sub-sub-channel **406**, and settings for operating parameters of the first and/or second DSPs **536** and 538.

The Payload task **908** interfaces with the CPLD **530** and assembles each command intended for the endpoint transceivers **112** into a data packet that is decoded by the endpoint transceivers **112.** The Payload **task 908** outputs the data packet to the CPLD **530**, which buffers the data **700** and **702.** The data packet is then transmitted to the endpoint transceivers **112** as discussed herein in more detail.

The Work task **912** interfaces with the CPLD **530** and the first and second DSPs **536** and **538.** It sends instructions to the variable gain controller **528** to change operating parameters of the first and second digital signal processor **536** and **538,** such as the gain of the various variable gain devices **502, 504, 506, 508,** and **714.** It also sends instructions to retrieve log files from the flash memory **532,** the updated time base, the signal strength bits from the scaling function **666** and the data latch **816**, the signal strength bits corresponding to signal strength from the LOS detection logics **692** and **818**, and the noise word from the bit latch **694.**

The CmdEpdWr task **904** interfaces with and retrieves data from the second DSP 538 that the endpoint transceivers **112** transmitted**.** In the exemplary embodiment, it retrieves the data bit from the bit latch **660** about once every 20 minutes. When retrieving the data bit, the CmdEpdWr task **904** actually retrieves a bit from the bit latch **660** for the signal received from each of the three distribution line conductors **302**, **304,** and **306.** It determines which of the distribution line conductors **302**, **304**, or **306** has the strongest signal strength and disregards the bits detected on the other two distribution line conductors. In the exemplary embodiment, the CmdEpdWr task **904** determines which distribution line conductor **302, 304,** or **306** has the strongest signal by comparing the signal strength word output by the scaling function **666** along the signal path **646** of the second DSP **538.**

After the data bit from the strongest distribution line conductor **302, 304,** or **306** is selected, the CmdEpdWr task **904** performs an error correction algorithm. In the exemplary embodiment, the CmdEpdWr task **904** executes a Bose Chaudhuri Hocquengham (BCH) code to correct errors in the data bits selected from the bit latch **660.** After error correction is complete, the data bit is stored in the data fileENDPT.DAT **918.**

The CHANBITS.DAT data file **918** stores a table that has a record for each of the sub-sub-channels **406.** In the exemplary embodiment, each record in the table has an entry identifying the sub-sub-channel **406** to which it corresponds, the serial number of the endpoint transceiver **112** assigned to the sub-sub-channel **406**, and fields to store 63 data bits. Each endpoint transceiver **112** is assigned a unique identification (I.D.) such as a serial number that can be formed with numbers, letters, and/or any other appropriate characters or signature. The data bits received from each of the endpoint transceivers **112** are stored in the table in the record corresponding to the sub-sub-channel **406** over which the data bit was received.

After 63 data bits are accumulated for a particular sub-sub-channel **406** and stored in the table, the CmdEpdWr task **904** assembles the 63 data bits into a data packet that includes the serial number of the endpoint transceiver **112** that transmitted the data bits and stores the data packet in the ENDPT.DAT data file **920.** After the data packet is formed and stored in the ENDPT.DAT data file **920,** the CmdEpdWr task **904** clears the data bits from the table in the CHANBITS.DAT data file **918.** In one possible embodiment, the ENDPT.DAT **920** stores 30 data packets for each sub-sub-channel **406.** In the exemplary embodiment, each data packet corresponds to about **24** hours worth of data collection, and thus, the ENDPT.DAT **920** data file stores 30 days worth of data for each sub-sub channel **406.**

The CmdFind task **906** and the CmdEpMon task **902** cooperate to find and monitor endpoint transceivers **112** that are connected to one of the distribution line conductors **302**, **304**, or **306.** The CmdFind task **906** makes the initial communication with each endpoint transceiver **112** to assign it a base frequency for data transmission to the substation controller **108.** The base frequency is within the bandwidth of an open or unused sub-sun channel **406.**

When a new endpoint transceiver **112** is installed, the control server **934** is programmed with the serial number for the new endpoint transceiver **112.** The command server **934** then sends the serial number and a find command to find the endpoint transceiver **112** to the CmdExe task **900** via the data link **936** and the Com Serv task **938.** The CmdExe task **900** passes the serial number and the find command to the CmdFind task **906**, which identifies an open sub-sub-channel **406** and maps the serial number to a base frequency within the open sub-sub-channel **406.** The CmdFind task **906** relays the serial number, assigned or mapped base frequency, and find command to the Payload task **908**, which assembles this data into a FIND ENDPOINT and passes the FIND ENDPOINT data packet to the substation controller **108** as described in more detail herein.

The substation controller **108** then transmits the FIND ENDPOINT data packet downstream on the distribution line conductors **302**, **304**, and **306** and it is processed by the all of the endpoint transceivers **112.** The transceivers process the FIND ENDPOINT data packet. If the endpoint transceiver **112** has the serial number in the FIND ENDPOINT data packet, it transmits an acknowledge signal to the substation controller **108** indicating that it has received its assigned sub-sub-channel **406** and begins transmitting data to the substation controller **108.** If the endpoint transceiver **112** does not have the serial number in the FIND ENDPOINT data packet, it discards the FIND ENDPOINT data packet and takes no further action with respect to the data packet.

The CmdEpMon task **902** monitors the status of each sub-sub-channel **406.** It receives the signal strength word output by the scaling function **666**, the LOS bit output by the LOS detection logic **692**, and the noise word output by bit latch **694.** Depending on the output of the LOS detection logic **692** and the bit latch **694**, the CmdEpMon task **902** changes the status of the sub-sub-channel **406** that is being monitored as described below in conjunction with the CHAT.DAT **916** data file.

The CmdFind task **906** and the CmdEpMon task **902** interface with two data files, FIND.DAT **914** and CHAT.DAT **916.**

The FIND.DAT data file **914** stores information related to the process of finding an endpoint transceiver **112.** For example, when ever the CmdFind task **906** attempts to find and endpoint transceiver **112**, it stores in the FIND.DAT data file **914** an I.D. of the find command, or any other command that is being sent in the FIND ENDPOINT data packet, the serial number of the endpoint transceiver **112** it attempting to find, and the frequency it assigned to the endpoint transceiver **112.** The CmdFind task **906** also stores in FIND.DAT **914** a time stamp indicating when transmission of the FIND ENDPOINT data packet was initiated and a time stamp indicating when the substation controller **108** received a reply or acknowledgement from the endpoint transceiver **112** that it was attempting to find.

The CHAT.DAT data file stores a database that has a record for each sub-sub-channel **406.** Each record includes a field identifying the base frequency for the sub-sub-channels **406,** the serial number of the endpoint transceiver **112** assigned to that sub-sub-channels **406** (i.e., base frequency with in the sub-sub-channel **406**), and the status of the sub-sub-channel **406** (i.e., base frequency with in the sub-sub-channel **406**). In the exemplary embodiment, the CHAT.DAT file has 9000 records, each corresponding to one of the 9000 sub-sub-channels **406.** In one possible embodiment, the status assigned to a sub-sub-channel **406** selected from the following: Unused, Temporary, Found, Permanent, Blocked, Lost, Restored, and Waiting.

The Unused status is assigned to a sub-sub-channel **406** if it is not assigned to an endpoint transceiver **112.** When the CmdFind task **906** receives a find command from the control server **934**, it identifies a sub-sub-channel **406** having an Unused status and assigns the base frequency within the identified unused sub-sub-channel **406** to the new endpoint transceiver **112.** The CmdFind task **906** then inputs the serial number, find command, and assigned base frequency to the Payload task **908** for processing and down stream transmission.

Upon receiving an acknowledgement from the endpoint transceiver **112**, the CmdFind task **906** changes the status of the sub-sub-channel **406** from Unused to Temporary. The CmdExe task **900** then reports the found status of the new endpoint transceiver **112** to the control server **934.** Upon reporting the Found status of the endpoint transceiver **112,** the CmdFind task **906** changes the status of the assigned sub-sub-channel **406** from Found to Permanent.

The status of a sub-sub-channel **406** is changed to Blocked to prevent an endpoint transceiver **112** from being assigned that sub-sub-channel **406.** A sub-sub-channel **406** can have a Blocked status for a variety of reasons. An example includes detection of a noisy sub-sub-channel **406.** If the single board computer **540** runs diagnostics and determines that a sub-sub-channel **406** is too noisy or if the Control Server **934** sends an instruction to the substation computer to block out the noisy sub-sub-station **406.** In the exemplary embodiment, the single board computer **540** compares the value of the noise word received from the bit latch **694** on the second DSP **538** to a predetermined value, and determines that the channel is too noisy if the value of the noise word is greater than the predetermined value. The noise word corresponds to the level of noise on the sub-sub-channel **406.**

If a Blocked status is assigned to a sub-sub-channel **406** that is currently being used by an endpoint transceiver **112,** the CmdFind task **906** will select a new sub-sub-channel **406** that has an Unused status and instruct the Payload task **908** to generate and initiate transmission of a FIND ENDPOINT data packet. The serial number for the endpoint transceiver **112** is then stored in the record for the newly assigned sub-sub-channel **406** and the status sequences through the Found and Permanent states as described above.

The status of a particular sub-sub-channel **406** is changed to Lost if the CmdEpMon task **902** determines that there is a loss of power at the frequencies in that sub-sub-channel **406. In** the exemplary embodiment, the Work Task **912** receives the signal strength bit from the LOS detection logic **692** and provides the signal strength bit to the CmdEpMon task **902.** If the signal strength bit indicates that the endpoint transceiver **112** assigned to that sub-sub-channel **406** is lost, the CmdEpMon task **902** changes the status of the sub-sub-channel **406** to Lost and the CmdExe task **900** reports the Lost status for the sub-sub-channel **406** to the control server **934.** The Control Server **934** then typically instructs the CmdFind task **906** to find the lost endpoint transceiver **112** assigned to the sub-sub-channel **406.** In an alternative embodiment, the CmdFind task **906** automatically attempts to find a lost endpoint transceiver **112.**

When a lost endpoint transceiver **112** is found again, the status of the assigned sub-sub-channel **406** is changed from Lost to Restored. The status remains Restored while the Restored status is reported to the Control Server **934** by the CmdExe task **900.** The status of the sub-sub-channel **406** is changed from Restored to Permanent upon reporting of the Restored status to the control server **934.**

The status of a sub-sub-channel **406** is changed to Wait when the CmdFind task **906** is instructed to find an endpoint transceiver **112** and the current state of the sub-sub-channel **406** is currently Temporary, Found, Permanent, or Restored. When the status of the sub-sub-channel **406** is Wait, the CmdFind task **906** enters a wait state for a predetermined period of time and then instructs the Payload task **908** to generate and transmit a find packet after the predetermined period of time lapses. Because the signal received from the endpoint transceivers **112** are at low frequency, they take a while to decay. Given the frequencies used in the exemplary embodiment, the signal transmitted by the endpoint transceiver **112** can take up to 20 minutes to decay, and the predetermined period of time in which the CmdFind task **906** sits in the wait state is about 20 minutes or longer.

When an endpoint transceiver **112** is found after the wait state of the CmdFind task **906** lapses, the status of the sub-sub-channel **406** is changed to Found while the Found status is being reported to the Control Server **934** and then the status is changed to Permanent after reporting is complete.

The Scheduler task **930** schedules all actions or events that are executed by the single board computer **540** at a predetermined time or in periodic intervals. The Scheduler task **930** schedules and initiates execution of a variety of commands including commands executed internal to the substation processing unit **332.** For example, the Scheduler task **930** instructs the CmdEpdWr **904** to retrieve a data bit from the bit latch **660** about once every 20 minutes.

The Scheduler task **930** also schedules the transmission of data packets to the endpoint transceivers **112.** For example, the Scheduler task **930** instructs the Payload task 908 to send a TIME data packet to the endpoint transceivers **112** about once every five minutes. The payload for the TIME data packet includes the current date and time as determined by the Net Time task **932**, which periodically retrieves the current date and time from the time server and then tracks the current time between download from the time server. If no other data is scheduled for transmission to the endpoint transceivers **112** on the scheduled one-minute intervals, the Scheduler Task **930** instructs the Payload Task to send a TIME data packet by default.

An advantage of frequently sending Time data packets to the endpoint transceivers **112** is that it facilitates synchronous operation, including data collection, of all the endpoint transceivers that are downstream from the substation controller **108.** It also facilitates synchronous communication between the substation controller **108** and the endpoint transceivers **112.**

In another example and as explained in more detail with respect to the CmdFind task **906**, when a new endpoint transceiver **112** is to be installed or a lost endpoint transceiver **112** is being restored, the Scheduler task **930** repeatedly instructs the Payload task **908** to send a FIND ENDPOINT data packet until the new endpoint transceiver **112** acknowledges assignment of a sub-sub-channel **406.** The endpoint transceiver **112** acknowledges assignment of a sub-sub-channel **406** by transmitting a data packet that contains an acknowledgment to the substation controller **108** and generating an acknowledgement signal for observation at the endpoint transceiver **112** itself. This repeated transmission of a FIND ENDPOINT data packet is momentarily interrupted when the interval lapses for another scheduled transmission of a data packet, such as a TIME data packet.

In one possible embodiment, the Scheduler task **930** instructs the Payload task to send a data packet to the endpoint transceivers **112** once every minute. An advantage of sending data packets in such short intervals facilitates rapid deployment of newly installed endpoint transceivers **112.** As a result, an installer can receive quick confirmation that the endpoint transceiver **112** was successfully installed without waiting for more than a couple of minutes.

The CmdLog task **910** records each command executed by the single board computer and stores the command in the SPU.LOG text file **928.** The CmdLog task **910** also executes or initiates execution of various diagnostics of the single board computer **540** and the first and second DSPs **536** and **538**, and records the results of the diagnostics in the SPU.LOG text file **928.**

The architecture of the code executed by the single board computer **540** has many advantages. For example, it provides a scalable system because endpoint transceivers **112** can be quickly added to the system by simply installing the endpoint transceiver **112** and entering the serial number of the endpoint transceiver **112** into the control server **934.** It also provides flexibility for reassigning endpoint transceivers **112** from the SPU **332** located at one distribution substation **102** to another SPU **332** located at a different distribution substation **102.** For example, if service for an endpoint **104** is switched from one distribution substation **102** to a different distribution substation **102**, the control server **934** instructs the single board computer **540** located at the different distribution substation **102** to execute a find command for the endpoint transceiver(s) **112** located at the endpoint **104.**

Another example occurs when a distribution substation **102** goes offline and service for all of the endpoints **104** downstream from the offline distribution substation **102** are switched to different distribution substations **102.** In this example, the control server **934** sends find commands for each of the endpoint transceivers **112** that were originally downstream from the offline distribution substation **102** to the various distribution substations **102** that are still online. The single board computer **540** at the online distribution substations **102** executes the find commands. The single board computer **540 at** each of the online distribution substations **102** then registers the downstream endpoint transceivers **112** for which it executed the find command and from which it received an acknowledgment.

Additionally, the single board computer **540** and the control server **934** cooperate to identify and locate faults in the distribution plant. In one possible embodiment, for example, when the status of a sub-sub-channel is Lost and reported to the control server **934**, the control server generates an error report so that a service technician can repair or replace the endpoint transceiver **112** assigned to the Lost sub-sub-channel **406.** An advantage of automatically reporting the Lost status of sub-sub-channels **406** is that the utility can identify failures as quickly as they are reported. Another advantage is that the energy utility can be made aware of the Lost status (whether it due to a failed endpoint transceiver **112** or a loss of power) before a failure is even reported by a customer and can more quickly take action to repair the failure than if they had to rely on reports from customers.

Several sub-sub-channels being reported as Lost indicates that there is a failure in the distribution system itself. In another possible embodiment, if more than one sub-sub-channel **406** has a Lost status, the control server **934** identifies the common points in the distribution system that are upstream from the endpoint transceivers **112** assigned to the Lost sub-sub-channels. Identifying the common points of the distribution system in the manner helps to identify the potential points of the distribution system that failed resulting in a loss of power at the endpoints. Again, because the single board computer **540** reports the Lost status of the sub-sub-channels **406**, the control server **934** can quickly and automatically identify a power failure and isolate possible points in the distribution system where the error could have occurred. As a result, technicians and/or engineers can be dispatched to repair the failure.

In yet another possible embodiment, when some sub-sub-channels **406** have a lost status and other sub-sub-channels **406** do not have a lost status, the control server **934** identifies those points in the distribution system that are upstream from the endpoint transceivers **112** assigned to the Lost sub-sub-channels **406** and not upstream from the endpoint transceivers assigned to the sub-sub-channels **406** that are not Lost. Identifying those points between the endpoint transceivers **112** assigned to the Lost sub-sub-channels **406** and the endpoint transceivers **112** assigned to the sub-sub-channels **406** that are not Lost helps the energy utility more accurately isolate areas of the distribution system where the failure could be located.

The various embodiments described above are provided by way of illustration only and should not be construed to limit the invention. Those skilled in the art will readily recognize various modifications and changes that may be made to the present invention without following the example embodiments and applications illustrated and described herein, and without departing from the scope of the present invention, which is set forth in the following claims.

## Claims

1. A system for bi-directional communication within a power distribution system, the system configured to find an endpoint, the endpoint having an endpoint transceiver in electrical communication with a power distribution line, the power distribution line being within the power distribution system, the endpoint being identified by a unique I.D., the system comprising:
a substation transceiver electrically coupled to a power distribution line within the power distribution system,
**characterised by** further comprising a substation circuit in electrical communication with the substation transceiver, the substation circuit programmed to map the unique I.D. for the endpoint to a base frequency within a bandwidth and to control the substation transceiver to transmit a find endpoint data packet onto the power distribution network, the find endpoint data packet including the unique I.D. and the base frequency, and to assign a status to the base frequency upon receiving a signal from the endpoint, the status indicating that the substation transceiver is receiving signals in the frequency bandwidth.

2. The system of claim 1 wherein the substation circuit is further programmed to:
determine whether the substation transceiver stopped receiving a signal within the bandwidth corresponding to the base frequency assigned to the endpoint transceiver; and control the substation transceiver to retransmit the find endpoint data packet containing the unique I.D. of the endpoint and the base frequency assigned to the endpoint transceiver.

3. The system of claim 1 wherein the substation circuit is further programmed to control the substation transceiver to repeatedly transmit the find endpoint data packet in a predetermined interval until the substation transceiver receives a signal from the endpoint identified by the unique I.D.

4. The system of claim 3 wherein the predetermined interval is about 1 minute.

5. The system of claim 3 wherein the substation circuit is further programmed to control the substation transceiver to repeatedly transmit the find endpoint data packet in a predetermined interval, the repeated transmission of the data packet being interrupted only by the prescheduled transmission of an alternative data packet.

6. The system of claim 2 wherein the substation transceiver and substation circuit are located at a first power distribution substation, the system further comprising:
a second substation transceiver and a second substation circuit, the second substation transceiver being in electrical communication with the second substation circuit, the second substation transceiver and the second substation circuit being located at a second power distribution substation; and
a control server in data communication with the substation circuit at the first power distribution substation and the substation circuit at the second power distribution substation;
wherein upon a loss of communication between the endpoint and the substation transceiver at the first power distribution substation, the control server is configured to instruct the substation circuit at the second substation to map the unique I.D. identifying the endpoint to a base frequency within a bandwidth and to control the substation transceiver at the second power distribution substation to transmit a find endpoint data packet over the power distribution system, the data packet including the unique I.D. for the endpoint and the base frequency, and to assign a status to the base frequency upon receiving a signal from the endpoint, the status indicating that the substation transceiver located at the second power distribution substation is receiving signals in the bandwidth corresponding to the base frequency.

7. A computer data signal embodied in a carrier wave readable by a programmable circuit and encoding a data packet, the data packet comprising:
a character string identifying a unique endpoint, the endpoint including an endpoint transceiver in electrical communication with a power distribution line within a power distribution system, an endpoint circuit in electrical communication with the endpoint transceiver, and an automated meter reading device in electrical communication with the endpoint circuit;
a base frequency corresponding to a bandwidth over which the endpoint transceiver will transmit a signal upon receipt and processing of the data packet; and
a find command instructing the endpoint transceiver to transmit a signal over the bandwidth corresponding to the base frequency;
wherein the carrier wave is transmitted over a power distribution line within the power distribution system.

8. A method of communicating within a power distribution system to find an endpoint, the power distribution system comprising a substation transceiver electrically coupled to a power distribution line, and a substation circuit in electrical communication with the substation transceiver, the endpoint being identified by a unique I.D. and having an endpoint transceiver in electrical communication with the power distribution line, the method **characterised by** comprising the substation circuit:
mapping the unique I.D. for the endpoint to a base frequency within a bandwidth;
controlling the substation transceiver to transmit a find endpoint data packet onto the power distribution network, the find endpoint data packet including the unique I.D. and the base frequency; and
assigning a status to the base frequency upon receiving a signal from the endpoint, the status indicating that the substation transceiver is receiving signals in the frequency bandwidth.

9. The method of claim 8, wherein the substation circuit determines whether the substation transceiver stopped receiving a signal within the bandwidth corresponding to the base frequency assigned to the endpoint transceiver, and controls the substation transceiver to retransmit the find endpoint data packet containing the unique I.D. of the endpoint and the base frequency assigned to the endpoint transceiver.

10. The method of claim 8, wherein the substation circuit controls the substation transceiver to repeatedly transmit the find endpoint data packet in a predetermined interval until the substation transceiver receives a signal from the endpoint identified by the unique I.D.

11. The method of claim 10, wherein the predetermined interval is about 1 minute.

12. The method of claim 10, wherein the substation circuit controls the substation transceiver to repeatedly transmit the find endpoint data packet in a predetermined interval, the repeated transmission of the data packet being interrupted only by the prescheduled transmission of an alternative data packet.

13. The method of claim 9, wherein the substation transceiver and substation circuit are located at a first power distribution substation, and the power distribution system further comprises:
a second substation transceiver and a second substation circuit, the second substation transceiver being in electrical communication with the second substation circuit, the second substation transceiver and the second substation circuit being located at a second power distribution substation; and
a control server in data communication with the substation circuit at the first power distribution substation and the substation circuit at the second power distribution substation;
the method further comprising the control server, upon a loss of communication between the endpoint and the substation transceiver at the first power distribution substation:
instructing the substation circuit at the second substation to map the unique I.D. identifying the endpoint to a base frequency within a bandwidth;
controlling the substation transceiver at the second power distribution substation to transmit a find endpoint data packet over the power distribution system, the data packet including the unique I.D. for the endpoint and the base frequency; and
assigning a status to the base frequency upon receiving a signal from the endpoint, the status indicating that the substation transceiver located at the second power distribution substation is receiving signals in the bandwidth corresponding to the base frequency.

14. The method of any of claims 8 to 13, wherein the unique I.D. is a serial number identifying the endpoint.

## Patentansprüche

1. System zur bidirektionalen Kommunikation innerhalb eines Leistungsverteilungssystems, wobei das System konfiguriert ist, einen Endpunkt zu finden, wobei der Endpunkt einen Endpunkt-Sendeempfänger in elektrischer Kommunikation mit einer Leistungsverteilungsleitung aufweist, wobei sich die Leistungsverteilungsleitung innerhalb des Leistungsverteilungssystems befindet, wobei der Endpunkt durch eine eindeutige ID identifiziert wird, das System Folgendes umfassend:
einen Substations-Sendeempfänger, welcher mit einer Leistungsverteilungsleitung innerhalb des Leistungsverteilungssystems elektrisch verbunden ist, **dadurch gekennzeichnet, dass** er weiterhin eine Substationsschaltung in elektrischer Kommunikation mit dem Substations-Sendeempfänger umfasst, wobei die Substationsschaltung programmiert ist, die eindeutige ID für den Endpunkt auf eine Basisfrequenz innerhalb einer Bandbreite abzubilden und den Substations-Sendeempfänger so zu steuern, dass er ein Datenpaket zum Endpunkt-Auffinden auf dem Leistungsverteilungsnetzwerk überträgt, wobei das Datenpaket zum Endpunkt-Auffinden die eindeutige ID und die Basisfrequenz umfasst, und dass er beim Empfangen eines Signals von dem Endpunkt der Basisfrequenz einen Status zuordnet, wobei der Status angibt, dass der Substations-Sendeempfänger Signale in der Frequenzbandbreite empfängt.

2. System nach Anspruch 1, wobei die Substationsschaltung weiterhin für Folgendes programmiert ist:
Bestimmen ob der Substations-Sendeempfänger aufgehört hat, ein Signal innerhalb der Bandbreite zu empfangen, welche der Basisfrequenz entspricht, welche dem Endpunkt-Sendeempfänger zugeordnet ist; und
Steuern des Substations-Sendeempfängers, das Datenpaket zum Endpunkt-Auffinden wiederholt zu übertragen, welches die eindeutige ID des Endpunktes und die Basisfrequenz enthält, welche dem Endpunkt-Sendeempfänger zugeordnet ist.

3. System nach Anspruch 1, wobei die Substationsschaltung weiterhin programmiert ist, den Substations-Sendeempfänger zu steuern, um das Datenpaket zum Endpunkt-Auffinden in einem vorgegebenen Intervall wiederholt zu übertragen, bis der Substations-Sendeempfänger ein Signal von dem Endpunkt empfängt, welcher durch die eindeutige ID identifiziert ist.

4. System nach Anspruch 3, wobei das vorgegebene Intervall ungefähr 1 Minute beträgt.

5. System nach Anspruch 3, wobei die Substationsschaltung weiterhin programmiert ist, den Substations-Sendeempfänger zu steuern, um das Datenpaket zum Endpunkt-Auffinden in einem vorgegebenen Intervall wiederholt zu übertragen, wobei das wiederholte Übertragen des Datenpakets nur von dem zuvor eingeplanten Übertragen eines alternativen Datenpakets unterbrochen wird.

6. System nach Anspruch 2, wobei der Substations-Sendeempfänger und die Substationsschaltung an einer ersten Leistungsverteilungs-Substation angeordnet sind, das System weiterhin Folgendes umfassend:
einen zweiten Substations-Sendeempfänger und eine zweite Substationsschaltung, wobei der zweite Substations-Sendeempfänger in elektrischer Kommunikation mit der zweiten Substationsschaltung ist, wobei der zweite Substations-Sendeempfänger und die zweite Substationsschaltung an einer zweiten Leistungsverteilungs-Substation angeordnet sind; und
einen Steuerungs-Server in Datenkommunikation mit der Substationsschaltung an der ersten Leistungsverteilungs-Substation und mit der Substationsschaltung an der zweiten Leistungsverteilungs-Substation;
wobei bei einem Verlust der Kommunikation zwischen dem Endpunkt und dem Substations-Sendeempfänger an der ersten Leistungsverteilungs-Substation der Steuerungs-Server konfiguriert ist, die Substationsschaltung an der zweiten Substation anzuweisen, die eindeutige ID, welche den Endpunkt identifiziert, auf eine Basisfrequenz innerhalb einer Bandbreite abzubilden, und den Substations-Sendeempfänger an der zweiten Leistungsverteilungs-Substation zu steuern, dass er ein Datenpaket zum Endpunkt-Auffinden über das Leistungsverteilungssystem überträgt, wobei das Datenpaket die eindeutige ID für den Endpunkt und die Basisfrequenz umfasst, und der Basisfrequenz beim Empfangen eines Signals von dem Endpunkt einen Status zuordnet, wobei der Status angibt, dass der Substations-Sendeempfänger, welcher an der zweiten Leistungsverteilungs-Substation angeordnet ist, Signale in der Bandbreite empfängt, welche der Basisfrequenz entspricht.

7. Computerdatensignal, welches in einer Trägerwelle ausgeführt ist, welche von einer programmierbaren Schaltung lesbar ist, und ein Datenpaket codiert, das Datenpaket Folgendes umfassend:
eine Zeichenfolge, welche einen eindeutigen Endpunkt identifiziert, wobei der Endpunkt einen Endpunkt-Sendeempfänger in elektrischer Kommunikation mit einer Leistungsverteilungsleitung innerhalb eines Leistungsverteilungssystems, eine Endpunktschaltung in elektrischer Kommunikation mit dem Endpunkt-Sendeempfänger und eine automatisierte Messauslesevorrichtung in elektrischer Kommunikation mit der Endpunktschaltung umfasst;
eine Basisfrequenz, welche einer Bandbreite entspricht, über welche der Endpunkt-Sendeempfänger beim Empfang und Verarbeiten des Datenpakets ein Signal überträgt; und
einen Auffinden-Befehl, welcher den Endpunkt-Sendeempfänger anweist, ein Signal über die Bandbreite zu übertragen, welche der Basisfrequenz entspricht;
wobei die Trägerwelle über eine Leistungsverteilungsleitung innerhalb des Leistungsverteilungssystems übertragen wird.

8. Verfahren zum Kommunizieren innerhalb eines Leistungsverteilungssystems, um einen Endpunkt aufzufinden, das Leistungsverteilungssystem umfassend einen Substations-Sendeempfänger, welcher mit einer Leistungsverteilungsleitung elektrisch verbunden ist, und eine Substationsschaltung in elektrischer Kommunikation mit dem Substations-Sendeempfänger, wobei der Endpunkt durch eine eindeutige ID identifiziert ist und einen Endpunkt-Sendeempfänger in elektrischer Kommunikation mit der Leistungsverteilungsleitung aufweist, das Verfahren **dadurch gekennzeichnet, dass** es die Substationsschaltung und Folgendes umfasst:
Abbilden der eindeutigen ID für den Endpunkt auf eine Basisfrequenz innerhalb einer Bandbreite;
Steuern des Substations-Sendeempfängers, dass er ein Datenpaket zum Endpunkt-Auffinden auf dem Leistungsverteilungsnetzwerk überträgt, wobei das Datenpaket zum Endpunkt-Auffinden die eindeutige ID und die Basisfrequenz umfasst; und
Zuordnen eines Status zu der Basisfrequenz beim Empfangen eines Signals von dem Endpunkt, wobei der Status angibt, dass der Substations-Sendeempfänger Signale in der Frequenzbandbreite empfängt.

9. Verfahren nach Anspruch 8, wobei die Substationsschaltung bestimmt, ob der Substations-Sendeempfänger aufgehört hat, ein Signal innerhalb der Bandbreite entsprechend der Basisfrequenz zu empfangen, welche dem Endpunkt-Sendeempfänger zugeordnet ist, und den Substations-Sendeempfänger steuert, das Datenpaket zum Endpunkt-Auffinden wiederholt zu übertragen, welches die eindeutige ID des Endpunkts und die Basisfrequenz enthält, welche dem Endpunkt-Sendeempfänger zugeordnet ist.

10. Verfahren nach Anspruch 8, wobei die Substationsschaltung den Substations-Sendeempfänger steuert, das Datenpaket zum Endpunkt-Auffinden in einem vorgegebenen Intervall wiederholt zu übertragen, bis der Substations-Sendeempfänger ein Signal von dem Endpunkt empfängt, welcher durch die eindeutige ID identifiziert ist.

11. Verfahren nach Anspruch 10, wobei das vorgegebene Intervall ungefähr 1 Minute beträgt.

12. Verfahren nach Anspruch 10, wobei die Substationsschaltung den Substations-Sendeempfänger steuert, das Datenpaket zum Endpunkt-Auffinden in einem vorgegebenen Intervall wiederholt zu übertragen, wobei das wiederholte Übertragen des Datenpakets nur von dem zuvor eingeplanten Übertragen eines alternativen Datenpakets unterbrochen wird.

13. Verfahren nach Anspruch 9, wobei der Substations-Sendeempfänger und die Substationsschaltung an einer ersten Leistungsverteilungs-Substation angeordnet sind, und das Leistungsverteilungssystem weiterhin Folgendes umfasst:
einen zweiten Substations-Sendeempfänger und eine zweite Substationsschaltung, wobei der zweite Substations-Sendeempfänger in elektrischer Kommunikation mit der zweiten Substationsschaltung ist, wobei der zweite Substations-Sendeempfänger und die zweite Substationsschaltung an einer zweiten Leistungsverteilungs-Substation angeordnet sind; und
einen Steuerungs-Server in Datenkommunikation mit der Substationsschaltung an der ersten Leistungsverteilungs-Substation und mit der Substationsschaltung an der zweiten Leistungsverteilungs-Substation;
wobei das Verfahren, welches weiterhin den Steuerungs-Server umfasst, bei einem Verlust der Kommunikation zwischen dem Endpunkt und dem Substations-Sendeempfänger an der ersten Leistungsverteilungs-Substation Folgendes umfasst:
Anweisen der Substationsschaltung an der zweiten Substation, die eindeutige ID, welche den Endpunkt identifiziert, auf eine Basisfrequenz innerhalb einer Bandbreite abzubilden;
Steuern des Substations-Sendeempfängers an der zweiten Leistungsverteilungs-Substation, dass er ein Datenpaket zum Endpunkt-Auffinden über das Leistungsverteilungssystem überträgt, wobei das Datenpaket die eindeutige ID für den Endpunkt und die Basisfrequenz umfasst; und
Zuordnen eines Status zu der Basisfrequenz beim Empfangen eines Signals von dem Endpunkt, wobei der Status angibt, dass der Substations-Sendeempfänger, welcher an der zweiten Leistungsverteilungs-Substation angeordnet ist, Signale in der Bandbreite empfängt, welche der Basisfrequenz entspricht.

14. Verfahren nach einem der Ansprüche 8 bis 13, wobei die eindeutige ID eine Seriennummer ist, welche den Endpunkt identifiziert.

## Revendications

1. Système de communication bidirectionnelle qui se trouve dans un système de distribution électrique, le système étant configuré pour trouver un point final, le point final ayant un émetteur-récepteur de point final en communication électrique avec une ligne de distribution électrique, la ligne de distribution électrique se trouvant dans le système de distribution électrique, le point final étant identifié par un I.D. unique, le système comprenant :
un émetteur-récepteur de sous-station couplé électriquement à une ligne de distribution électrique qui se trouve dans le système de distribution électrique,
**caractérisé en ce qu'**il comprend en outre un circuit de sous-station en communication électrique avec l'émetteur-récepteur de sous-station, le circuit de sous-station étant programmé pour mapper l'I.D. unique pour le point final à une fréquence de base qui se trouve dans une bande passante et pour commander l'émetteur-récepteur de sous-station afin de transmettre un paquet de données de point final à trouver sur le réseau de distribution électrique, le paquet de données de point final à trouver comportant l'I.D. unique et la fréquence de base, et afin d'attribuer un état à la fréquence de base lors de la réception d'un signal à partir du point final, l'état indiquant que l'émetteur-récepteur de sous-station est entrain de recevoir des signaux dans la bande passante de fréquence.

2. Système de la revendication 1, dans lequel le circuit de sous-station est en outre programmé :
pour déterminer si l'émetteur-récepteur de sous-station a cessé de recevoir un signal qui se trouve dans la bande passante correspondant à la fréquence de base attribuée à l'émetteur-récepteur de point final ; et
pour commander l'émetteur-récepteur de sous-station afin de retransmettre le paquet de données de point final à trouver contenant l'I.D. unique du point final et la fréquence de base attribuée à l'émetteur-récepteur de point final.

3. Système de la revendication 1, dans lequel le circuit de sous-station est en outre programmé pour commander l'émetteur-récepteur de sous-station afin de transmettre à maintes reprises le paquet de données de point final à trouver dans un intervalle prédéterminé jusqu'à ce que l'émetteur-récepteur de sous-station reçoive un signal à partir du point final identifié par l'I.D. unique.

4. Système de la revendication 3, dans lequel l'intervalle prédéterminé est d'environ 1 minute.

5. Système de la revendication 3, dans lequel le circuit de sous-station est en outre programmé pour commander l'émetteur-récepteur de sous-station afin de transmettre à maintes reprises le paquet de données de point final à trouver dans un intervalle prédéterminé, la transmission répétée du paquet de données n'étant interrompue que par la transmission pré-planifiée d'un autre paquet de données.

6. Système de la revendication 2, dans lequel l'émetteur-récepteur de sous-station et le circuit de sous-station sont situés au niveau d'une première sous-station de distribution électrique, le système comprenant en outre :
un deuxième émetteur-récepteur de sous-station et un deuxième circuit de sous-station, le deuxième émetteur-récepteur de sous-station étant en communication électrique avec le deuxième circuit de sous-station, le deuxième émetteur-récepteur de sous-station et le deuxième circuit de sous-station étant situés au niveau d'une deuxième sous-station de distribution électrique ; et
un serveur de commande en communication de données avec le circuit de sous-station au niveau de la première sous-station de distribution électrique et le circuit de sous-station au niveau de la deuxième sous-station de distribution électrique ;
où, lors d'une perte de communication entre le point final et l'émetteur-récepteur de sous-station au niveau de la première sous-station de distribution électrique, le serveur de commande est configuré pour donner une instruction au circuit de sous-station au niveau de la deuxième sous-station afin de mapper l'I.D. unique identifiant le point final à une fréquence de base qui se trouve dans une bande passante et pour commander l'émetteur-récepteur de sous-station au niveau de la deuxième sous-station de distribution électrique afin de transmettre un paquet de données de point final à trouver sur le système de distribution électrique, le paquet de données comportant l'I.D. unique pour le point final et la fréquence de base, et afin d'attribuer un état à la fréquence de base lors de la réception d'un signal à partir du point final, l'état indiquant que l'émetteur-récepteur de sous-station situé au niveau de la deuxième sous-station de distribution électrique est entrain de recevoir des signaux dans la bande passante correspondant à la fréquence de base.

7. Signal de données informatiques incorporé dans une onde porteuse lisible par un circuit programmable et codant un paquet de données, le paquet de données comprenant :
une chaîne de caractères identifiant un point final unique, le point final comportant un émetteur-récepteur de point final en communication électrique avec une ligne de distribution électrique qui se trouve dans un système de distribution électrique, un circuit de point final en communication électrique avec l'émetteur-récepteur de point final, et un dispositif de lecture automatique de compteur en communication électrique avec le circuit de point final ;
une fréquence de base correspondant à une bande passante sur laquelle l'émetteur-récepteur de point final transmettra un signal lors de la réception et du traitement du paquet de données ; et
une commande trouver donnant une instruction à l'émetteur-récepteur de point final pour transmettre un signal sur la bande passante correspondant à la fréquence de base ;
où l'onde porteuse est transmise sur une ligne de distribution électrique qui se trouve dans le système de distribution électrique.

8. Procédé de communication qui se trouve dans un système de distribution électrique pour trouver un point final, le système de distribution électrique comprenant un émetteur-récepteur de sous-station couplé électriquement à une ligne de distribution électrique, et un circuit de sous-station en communication électrique avec l'émetteur-récepteur de sous-station, le point final étant identifié par un I.D. unique et ayant un émetteur-récepteur de point final en communication électrique avec la ligne de distribution électrique, le procédé étant **caractérisé en ce qu'**il comprend le circuit de sous-station :
le mappage de l'I.D. unique pour le point final à une fréquence de base qui se trouve dans une bande passante ;
la commande de l'émetteur-récepteur de sous-station pour transmettre un paquet de données de point final à trouver sur le réseau de distribution électrique, le paquet de données de point final à trouver comportant l'I.D. unique et la fréquence de base ; et
l'attribution d'un état à la fréquence de base lors de la réception d'un signal à partir du point final, l'état indiquant que l'émetteur-récepteur de sous-station est entrain de recevoir des signaux dans la bande passante de fréquence.

9. Procédé de la revendication 8, dans lequel le circuit de sous-station détermine si l'émetteur-récepteur de sous-station a cessé de recevoir un signal qui se trouve dans la bande passante correspondant à la fréquence de base attribuée à l'émetteur-récepteur de point final, et commande l'émetteur-récepteur de sous-station pour retransmettre le paquet de données de point final à trouver contenant l'I.D. unique du point final et la fréquence de base attribuée à l'émetteur-récepteur de point final.

10. Procédé de la revendication 8, dans lequel le circuit de sous-station commande l'émetteur-récepteur de sous-station pour transmettre à maintes reprises le paquet de données de point final à trouver dans un intervalle prédéterminé jusqu'à ce que l'émetteur-récepteur de sous-station reçoive un signal à partir du point final identifié par l'I.D. unique

11. Procédé de la revendication 10, dans lequel l'intervalle prédéterminé est d'environ 1 minute.

12. Procédé de la revendication 10, dans lequel le circuit de sous-station commande l'émetteur-récepteur de sous-station pour transmettre à maintes reprises le paquet de données de point final à trouver dans un intervalle prédéterminé, la transmission répétée du paquet de données n'étant interrompue que par la transmission pré-planifiée d'un autre paquet de données.

13. Procédé de la revendication 9, dans lequel l'émetteur-récepteur de sous-station et le circuit de sous-station sont situés au niveau d'une première sous-station de distribution électrique, et le système de distribution électrique comprend en outre :
un deuxième émetteur-récepteur de sous-station et un deuxième circuit de sous-station, le deuxième émetteur-récepteur de sous-station étant en communication électrique avec le deuxième circuit de sous-station, le deuxième émetteur-récepteur de sous-station et le deuxième circuit de sous-station étant situés au niveau d'une deuxième sous-station de distribution électrique ; et
un serveur de commande en communication de données avec le circuit de sous-station au niveau de la première sous-station de distribution électrique et le circuit de sous-station au niveau de la deuxième sous-station de distribution électrique ;
le procédé comprenant en outre le serveur de commande, lors d'une perte de communication entre le point final et l'émetteur-récepteur de sous-station au niveau de la première sous-station de distribution électrique, comprend les étapes qui consistent :
à donner une instruction au circuit de sous-station au niveau de la deuxième sous-station pour mapper l'I.D. unique identifiant le point final à une fréquence de base qui se trouve dans une bande passante ;
à commander l'émetteur-récepteur de sous-station au niveau de la deuxième sous-station de distribution électrique pour transmettre un paquet de données de point final à trouver sur le système de distribution électrique, le paquet de données comportant l'I.D. unique pour le point final et la fréquence de base ; et
à attribuer un état à la fréquence de base lors de la réception d'un signal à partir du point final, l'état indiquant que l'émetteur-récepteur de sous-station situé au niveau de la deuxième sous-station de distribution électrique est entrain de recevoir des signaux dans la bande passante correspondant à la fréquence de base.

14. Procédé de l'une des revendications 8 à 13, dans lequel l'I.D. unique est un numéro de série identifiant le point final.
